(19) Europäisches Patentamt
European Patent Office
Office européen des brevets

(11) EP 4 317 329 A1

(12) # EUROPEAN PATENT APPLICATION
published in accordance with Art. 153(4) EPC

(43) Date of publication:
**07.02.2024 Bulletin 2024/06**

(21) Application number: **22775856.2**

(22) Date of filing: **25.03.2022**

(51) International Patent Classification (IPC):
***C09D 5/02*** (2006.01) ***C08F 293/00*** (2006.01)
***C09D 127/08*** (2006.01) ***C08F 2/22*** (2006.01)

(52) Cooperative Patent Classification (CPC):
**C08F 2/22; C08F 293/00; C09D 5/02; C09D 127/08**

(86) International application number:
**PCT/JP2022/014661**

(87) International publication number:
**WO 2022/203075 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2021 JP 2021052300**

(71) Applicant: **Asahi Kasei Kabushiki Kaisha**
**Tokyo 1000006 (JP)**

(72) Inventors:
- **NAKASHIMA Hiroyuki**
**Tokyo 100-0006 (JP)**
- **HOSOE Natsuki**
**Tokyo 100-0006 (JP)**
- **YAMASAKI Naoaki**
**Tokyo 100-0006 (JP)**

(74) Representative: **D Young & Co LLP**
**120 Holborn**
**London EC1N 2DY (GB)**

(54) **AQUEOUS DISPERSION OF VINYL HALIDE COPOLYMER, AND FILM**

(57) A water dispersion of a vinyl halide copolymer is synthesized by a method including at least one of each of: an emulsion polymerization step A in which a monomer group used as a raw material has an n-octanol/water partition coefficient (logPow) with an average value of 2.2 or less; and an emulsion polymerization step B in which a monomer group used as a raw material includes a vinyl halide monomer and a copolymerization monomer having a reactivity ratio r1 with vinylidene chloride of less than 0.7 and in which a mass proportion of the vinyl halide monomer among 100 mass% of the monomer group is 60 mass% or more. A mass proportion of structural units derived from the copolymerization monomer having a reactivity ratio r1 of less than 0.7 is 4 mass% or more relative to 100 mass% of total mass of a polymer synthesized in step B. Note that the method does not encompass a method in which the average value for an n-octanol/water partition coefficient (logPow) of a monomer group used as a raw material is the same value in every emulsion polymerization step. Also note that an emulsion polymerization step corresponding to both step A and step B may be considered to be step A or step B.

EP 4 317 329 A1

## Description

TECHNICAL FIELD

The present disclosure relates to a water dispersion of a vinyl halide copolymer and a film including a layer formed by coating this water dispersion.

BACKGROUND

Films for packaging of food and pharmaceutical products need to hermetically seal these products by sufficiently blocking gases such as oxygen, nitrogen, carbon dioxide, and water vapor in the atmosphere in order to preserve the quality of these products. In this regard, a film having a layer that, from among various types of resins, is formed from a vinyl halide-based copolymer water dispersion, and particularly from a vinylidene chloride-based copolymer water dispersion resin, has excellent barrier properties against water vapor and oxygen, and therefore is highly suitable for food and pharmaceutical product packaging applications.

In recent years, there has been demand for packaging films to have even higher gas barrier properties for the following reasons.

1) Preservation of pharmaceutical and food product quality and drug efficacy for longer periods
2) Film thickness reduction to meet demand to improve the ease of pushing out the contents of packaged products in view of the aging population
3) Film thickness reduction for improvement of productivity

Patent Literature (PTL) 1 to 7 describe known examples of vinylidene chloride-based copolymer water dispersions for forming films having barrier properties.

CITATION LIST

Patent Literature

PTL 1: WO 2013/125699 A1
PTL 2: JP 2001-526315 A
PTL 3: JP H05-202107 A
PTL 4: JP 2018-127523 A
PTL 5: JP S60-192768 A
PTL 6: FR 1466220 A
PTL 7: JP 2009-541565 A

SUMMARY

(Technical Problem)

For the vinyl halide copolymers described in PTL 1 to 3, 6, and 7, further improvement of water vapor barrier properties is difficult due to their combinations of monomers.

In contrast, vinyl halide copolymers obtained through copolymerization with a comonomer having a reactivity ratio r1 with vinylidene chloride of less than 0.7 such as those described in PTL 4 and 5 have high water vapor barrier properties. However, such copolymers readily crystallize, and crystallization progresses even in a water dispersion state, which results in a problem of deterioration of film formation properties over time upon long-term storage. This is a characteristic problem that is not evident when adopting a monomer composition such as used in PTL 1 to 3, 6, and 7.

Thus, with regards to the water dispersions described in PTL 1 to 7, it would be desirable to improve the balance of film formation properties after long-term storage (film formation life) and high barrier properties of a film including a layer formed from the water dispersion.

Accordingly, an object of the present disclosure is to provide a water dispersion of a vinyl halide copolymer that has excellent film formation properties after long-term storage while also maintaining high water vapor barrier properties of a film after coating.

(Solution to Problem)

As a result of extensive diligent research aimed at solving problems such as set forth above, the inventors found that a water dispersion of a vinyl halide copolymer including structural units with a specific composition and synthesized by a specific process has excellent film formation properties after long-term storage while also maintaining high water vapor barrier properties of a film after coating, and, in this manner, the inventors completed the present disclosure.

Specifically, primary features of the present disclosure are as follows.

[1] A water dispersion of a vinyl halide copolymer synthesizable by a method comprising at least one of each of:

an emulsion polymerization step A in which a monomer group used as a raw material has an n-octanol/water partition coefficient (logPow) with an average value of 2.2 or less; and
an emulsion polymerization step B in which a monomer group used as a raw material includes a vinyl halide monomer and a copolymerization monomer having a reactivity ratio r1 with vinylidene chloride of less than 0.7 and in which a mass proportion of the vinyl halide monomer among 100 mass% of the monomer group is 60 mass% or more, wherein
a mass proportion of structural units derived from the copolymerization monomer having a reactivity ratio r1 of less than 0.7 is 4 mass% or more relative to 100 mass% of total mass of a polymer synthesized in the step B, and provisos are made that the method does not encompass a method in which an average value for an n-octanol/water partition coefficient (logPow) of a monomer group used as a raw material is the same value in every emulsion polymerization step and that an emulsion polymerization step corresponding to both the step A and the step B may be considered to be the step A or may be considered to be the step B.

[2] The water dispersion of a vinyl halide copolymer according to [1], wherein the vinyl halide monomer is vinylidene chloride.
[3] The water dispersion of a vinyl halide copolymer according to [1] or [2], wherein a value (ΔlogPow) obtained when an average value for an n-octanol/water partition coefficient (logPow) of the monomer group used as a raw material in the step B is subtracted from the average value for the n-octanol/water partition coefficient (logPow) of the monomer group used as a raw material in the step A is less than 0.
[4] The water dispersion of a vinyl halide copolymer according to any one of [1] to [3], wherein a polymer synthesized in the step A has a glass-transition point of 20°C or higher.
[5] The water dispersion of a vinyl halide copolymer according to any one of [1] to [4], wherein a mass proportion of structural units derived from a vinyl halide monomer is 70 mass% or less relative to 100 mass% of total mass of a polymer synthesized in the step A.
[6] The water dispersion of a vinyl halide copolymer according to any one of [1] to [5], wherein the copolymerization monomer having a reactivity ratio r1 of less than 0.7 is one or more selected from the group consisting of a nitrile group-containing monomer, a carboxyl group-containing monomer, and methyl methacrylate.
[7] The water dispersion of a vinyl halide copolymer according to [6], wherein a mass proportion of structural units derived from the nitrile group-containing monomer is 1 mass% or more relative to 100 mass% of total mass of structural units derived from the vinyl halide monomer, structural units derived from the copolymerization monomer having a reactivity ratio r1 of less than 0.7, and structural units derived from a copolymerization monomer having a reactivity ratio r1 of 0.7 or more.
[8] The water dispersion of a vinyl halide copolymer according to [6] or [7], wherein the nitrile group-containing monomer is methacrylonitrile.
[9] The water dispersion of a vinyl halide copolymer according to any one of [1] to [8], comprising more than 0 parts by mass and not more than 20 parts by mass of a crystal nucleating agent relative to 100 parts by mass of the vinyl halide copolymer.
[10] A water dispersion of a vinyl halide copolymer in which the vinyl halide copolymer satisfies all of the following conditions (1) to (3):

(1) upon comparison of a chromatogram obtained through measurement by solvent gradient chromatography of a purified polymer obtained through purification of the vinyl halide copolymer by methanol precipitation and a chromatogram obtained through measurement by solvent gradient chromatography of a purified polymer obtained through purification of the vinyl halide copolymer by acetone precipitation, a peak I is present that only appears in the chromatogram for the purified polymer obtained through purification by methanol precipitation;
(2) a detection time of a peak apex of the peak I is less than 9 minutes; and
(3) the vinyl halide copolymer includes a polymer synthesized from a monomer group used as a raw material

that contains a vinyl halide monomer and a copolymerization monomer having a reactivity ratio r1 with vinylidene chloride of less than 0.7, wherein a mass proportion of the vinyl halide monomer among 100 mass% of the monomer group is 60 mass% or more, and a mass proportion of structural units derived from the copolymerization monomer having a reactivity ratio r1 of less than 0.7 is 4 mass% or more relative to 100 mass% of total mass of the polymer.

[11] The water dispersion of a vinyl halide copolymer according to [10], wherein content of a polymer of the peak I determined from peak area of the peak I is 0.1 mass% or more relative to 100 mass% of total mass of the vinyl halide copolymer.

[12] The water dispersion of a vinyl halide copolymer according to [10] or [11], wherein

the detection time of the peak apex of the peak I is 6.7 minutes to 7.2 minutes, and
content of a polymer of the peak I determined from peak area of the peak I is 0.1 mass% or more relative to 100 mass% of total mass of the vinyl halide copolymer.

[13] The water dispersion of a vinyl halide copolymer according to any one of [1] to [12], having a surface tension of not less than 20 mN/m and less than 48 mN/m.

[14] The water dispersion of a vinyl halide copolymer according to any one of [1] to [13], having a solid content of more than 50%.

[15] A film comprising a layer formed by coating the water dispersion of a vinyl halide copolymer according to any one of [1] to [14].

(Advantageous Effect)

An effect of excellent film formation properties after long-term storage while also maintaining high water vapor barrier properties of a film after coating is obtained through a water dispersion of a vinyl halide copolymer according to the present disclosure.

DETAILED DESCRIPTION

The following provides a detailed description of an embodiment of the present disclosure (hereinafter, referred to simply as the "present embodiment"). The present embodiment described below is an example for describing the present disclosure and is not intended to limit the present disclosure to the following contents. The present disclosure can be implemented with appropriate modifications that do not deviate from the essence thereof.

[Water dispersion of vinyl halide copolymer]

A water dispersion of a vinyl halide copolymer (hereinafter, also referred to simply as a "water dispersion") according to the present embodiment is a water dispersion of a vinyl halide copolymer synthesized by a method including at least one of each of: an emulsion polymerization step A (hereinafter, also referred to simply as "step A") in which a monomer group used as a raw material has an n-octanol/water partition coefficient (logPow) with an average value of 2.2 or less; and an emulsion polymerization step B (hereinafter, also referred to simply as "step B") in which a monomer group used as a raw material includes a vinyl halide monomer and a copolymerization monomer having a reactivity ratio r1 with vinylidene chloride of less than 0.7 and in which a mass proportion of the vinyl halide monomer among 100 mass% of the monomer group is 60 mass% or more, wherein a mass proportion of structural units derived from the copolymerization monomer having a reactivity ratio r1 of less than 0.7 is 4 mass% or more relative to 100 mass% of total mass of a polymer synthesized in step B.

(Note that the method does not encompass a method in which the average value for an n-octanol/water partition coefficient (logPow) of a monomer group used as a raw material is the same value in every emulsion polymerization step. Also note that an emulsion polymerization step corresponding to both step A and step B may be considered to be step A or step B.)

An emulsion polymerization step corresponding to both step A and step B may, in other words, be classified as either step A or step B so long as the synthesis method of the water dispersion of the vinyl halide copolymer includes at least one of each of step A and step B. For example, there may be cases such as described below.

- In a case in which only a step corresponding to only step A is included as another step besides one or more steps corresponding to both step A and step B, at least one step corresponding to both step A and step B is considered to be "step B". In this case, the at least one step corresponding to both step A and step B that is considered to be

"step B" is preferably inclusive of a step having a highest average value for an n-octanol/water partition coefficient (logPow) of a monomer group used as a raw material.

- In a case in which only a step corresponding to only step B is included as another step, at least one step corresponding to both step A and step B is considered to be "step A". In this case, the at least one step corresponding to both step A and step B that is considered to be "step A" is preferably inclusive of a step having a lowest average value for an n-octanol/water partition coefficient (logPow) of a monomer group used as a raw material.
- In a case in which a step corresponding to only step A and a step corresponding to only step B are included as other steps, an emulsion polymerization step corresponding to both step A and step B may be considered to be "step A" or may be considered to be "step B".
- In a case in which the method is composed of only steps corresponding to both step A and step B, at least one to these steps is considered to be "step A" and at least one of these steps is considered to be "step B". In this case, a step having a lowest average value for an n-octanol/water partition coefficient (logPow) of a monomer group used as a raw material is preferably included in "step A", and a step having a highest average value for an n-octanol/water partition coefficient (logPow) of a monomer group used as a raw material is preferably included in "step B".

Note that the term "copolymerization monomer" as used in the present disclosure refers to a monomer that is copolymerizable with a vinyl halide monomer. Examples of copolymerization monomers include not only the aforementioned copolymerization monomer having a reactivity ratio r1 with vinylidene chloride of less than 0.7 (also referred to as a "copolymerization monomer having a reactivity ratio r1 of less than 0.7"), but also a copolymerization monomer having a reactivity ratio r1 with vinylidene chloride of 0.7 or more (also referred to as a "copolymerization monomer having a reactivity ratio r1 of 0.7 or more").

Although either step A or step B may be performed earlier, it is preferable that step A is performed earlier. By performing step A earlier, polymer micelles synthesized in step A can serve as a reaction site for emulsion polymerization in the subsequently performed step B, and the rate of polymerization increases. Improvement of the rate of polymerization makes it possible to inhibit accumulation of a monomer having a slow rate of reaction (for example, a vinyl halide monomer) in step B and to prevent uneven composition arising in polymer chains. Uneven composition in polymer chains, and particularly excessive linking of structural units derived from a vinyl halide monomer promotes crystallization of vinyl halide copolymer particles, thereby reducing film formation life of the water dispersion. In other words, film formation life of the water dispersion can be improved by performing step A earlier.

Note that step B may be performed after step A is performed a plurality of times, or step B may be performed after step A is performed, and then step A may be performed thereafter. So long as at least one of each of step A and step B is included, another emulsion polymerization step (for example, a subsequently described emulsion polymerization step C) may be combined therewith.

Note that the phrase "perform a next step after a given step is performed" means that some or all of a water dispersion synthesized in the preceding step is used as a raw material in the next step. The water dispersion synthesized in the preceding step is referred to as a "seed latex".

Synthesis in step A or step B may be performed using a plurality of types of seed latexes.

The mass of a seed latex used in each step may be adjusted as appropriate in consideration of the mass proportion that a polymer synthesized in each step constitutes in the finally synthesized vinyl halide copolymer.

Note that in a series of polymerization processes, transition from one step to a next step is considered to have occurred when either of the following conditions is satisfied.

i) When a latex obtained by polymerization has been removed, some or all of that latex has been loaded into a separate polymerization machine, and monomer supply in this separate polymerization machine has subsequently been initiated

ii) When in the case of polymerization in the same polymerization machine, supply of monomer having a different composition to monomer supplied up until that point has been initiated with respect to the inside of the polymerization machine or a space that is connected to the polymerization machine, such as a monomer storage tank

Steps constituting the synthesis process of the water dispersion of the vinyl halide copolymer according to the present embodiment may be performed continuously using the same polymerization machine, or may take a form in which a water dispersion obtained by a step performed using a separate polymerization machine is added and polymerization is newly performed. A form in which some of a water dispersion synthesized using a separate polymerization machine is added (external seed method) is preferable. In this case, the water dispersion that is added is referred to as an "external seed". The external seed method makes it possible to reduce variation in production by using a large amount of an external seed synthesized all at once in synthesis of a plurality of batches of the water dispersion of the vinyl halide copolymer. Moreover, productivity is also improved by completing a step of seed latex synthesis all at once.

In a case in which polymerization is performed continuously using the same polymerization machine (internal

seed method), it is preferable that addition of monomer in a next step is initiated after addition of monomer in a preceding step has ended, though there may be partial overlap thereof.

When a seed latex is used to perform synthesis, the seed latex may be added all at once at an initial stage (before the start of polymerization), or the seed latex may be added all at once, continuously, or intermittently after generation of initiator radicals inside of the polymerization machine. The seed latex is preferably added all at once at an initial stage.

In a particularly preferable synthesis process, step A is performed first to obtain a water dispersion, some of this water dispersion is feed all at once into a separate polymerization machine as an external seed, and polymerization in step B is subsequently performed.

[[Emulsion polymerization step A]]

In step A, emulsion polymerization is performed with a feature that a monomer group used as a raw material has an n-octanol/water partition coefficient (logPow) with an average value of 2.2 or less.

In a case in which the synthesis process of the water dispersion of the vinyl halide copolymer includes a plurality of steps A, the composition of a polymer synthesized in step A is taken to be a mass average of each of the steps.

The average value for logPow is calculated using the mass fractions of added monomers.

For example, in a case in which monomers a and b respectively have mass fractions of 0.3 and 0.7 and logPow of 1.0 and 2.0, the average value for logPow is determined by "$0.3 \times 1.0 + 0.7 \times 2.0$".

logPow is measured in accordance with "Partition coefficient (1-octanol/water)-Shake flask method" of Japanese Industrial Standard Z7260-107(2000).

The following indicates examples of logPow for monomers that are often used in polymerization of vinylidene chloride.

Vinylidene chloride (VDC): 2.41
Methyl acrylate (MA): 0.8
Acrylonitrile (AN): 0.25
Methacrylonitrile (MAN): 0.68
Methyl methacrylate (MMA): 1.38
Ethyl acrylate (EA): 1.32
Butyl acrylate (BA): 2.38
Acrylic acid (AA): 0.36
Styrene (St): 3.0
Itaconic acid: -0.4

As a result of the average value for logPow of used monomers being 2.2 or less, the polymer synthesized in step A is disposed in proximity to the aqueous phase in vinyl halide copolymer particles in the water dispersion that is finally synthesized (i.e., is disposed in a surface layer of the particles). The polymer synthesized in step A that is disposed in the surface layer surprisingly impedes crystallization in a latex state and improves film formation life. In a latex state, crystallization occurs most readily at an interface with an emulsifier (i.e., in a surface layer of particles). This is because the emulsifier is regularly arranged at the latex surface, and this can easily act a starting point for crystallization. This phenomenon is known with regards to crystallization of low-molecular weight emulsions. Accordingly, crystallization in a latex state can be impeded as a result of the polymer synthesized in step A being disposed in the surface layer and as a result of an emulsifier not being in direct contact with a vinyl halide polymer synthesized in step B that is disposed inward of the polymer synthesized in step A.

The average value for logPow of the monomer group used as a raw material in step A is 2.2 or less, preferably 2.0 or less, and more preferably 1.8 or less. A lower average value for logPow makes it easier for the polymer synthesized in step A to become disposed in a surface layer in particles of the vinyl halide copolymer. This results in improvement of film formation life of the water dispersion.

The following definition is made: "average value for logPow of monomer group used in step A - average value for logPow of monomer group used in step B = ΔlogPow".

ΔlogPow is preferably less than 0, more preferably less than -0.2, and even more preferably less than -0.4. A lower ΔlogPow makes it easier for the polymer synthesized in step A to become disposed in a surface layer in particles of the vinyl halide copolymer. This results in improvement of film formation life of the water dispersion.

[[Polymer synthesized in step A]]

The glass-transition point (Tg) of the polymer synthesized in step A is preferably 20°C or higher, more preferably

50°C or higher, even more preferably 60°C or higher, further preferably 80°C or higher, and particularly preferably 90°C or higher. Since vinyl halide copolymer particles in the water dispersion according to the present embodiment have a structure in which the surface thereof is covered by the polymer synthesized in step A, it is possible to cover the particle surface with a hard shell and to improve mechanical stability and thermal stability when the glass-transition point of the polymer synthesized in step A is within any of the ranges set forth above.

The following describes a measurement method of the glass-transition point.

In a case in which a water dispersion synthesized in step A can be isolated, the water dispersion is isolated and is then subjected to methanol precipitation described further below. Note that an isolated state means not containing a polymer synthesized in another step, though an additive such as an emulsifier added in step A may be included.

At least 10 mL of the isolated water dispersion is freeze dried, and then 0.5 g of the freeze dried product is collected. The collected freeze dried product is treated by methanol precipitation to obtain a methanol precipitate. The obtained precipitate is subjected to glass-transition point measurement described further below.

In a case in which the water dispersion synthesized in step A cannot be isolated, measurement is performed by the following method.

A monomer mixture (also referred to as a "raw material monomer" in the emulsion polymerization method for Tg measurement described below) that is obtained by mixing monomers used in step A with the mass composition in step A is subjected to emulsion polymerization by the emulsion polymerization method for Tg measurement described below to obtain a water dispersion.

At least 10 mL of the obtained water dispersion is freeze dried, and then 0.5 g of the freeze dried product is collected. The collected freeze dried product is treated by methanol precipitation described further below to obtain a methanol precipitate. The obtained precipitate is subjected to glass-transition point measurement described further below.

<Emulsion polymerization method for Tg measurement>

A glass-lined pressure-resistant reactor is charged with 300 parts by mass of pure water, 0.46 parts by mass of sodium hydrogen sulfite, and 2.2 parts by mass in terms of dry mass of sodium dodecylbenzenesulfonate solution having a solid content of 18% as an emulsifier relative to 100 parts by mass in terms of total mass of a raw material monomer. The contents are stirred while performing degassing, and then the pressure is increased to atmospheric pressure with nitrogen, and the temperature of the contents is maintained at 45°C. The pressure-resistant reactor is then charged with 10 parts by mass of the raw material monomer all at once, and 0.5 hours of polymerization is performed.

Metered addition of a solution obtained by dissolving 0.21 parts by mass of sodium persulfate as an initiator and 2.8 parts by mass in terms of dry mass of sodium dodecylbenzenesulfonate solution having a solid content of 18% as an emulsifier in 27 parts by mass of pure water is performed continuously over 3.5 hours starting from the point at which 10 parts by mass of the raw material monomer is added all at once.

Concurrently thereto, metered addition of the remaining 90 parts by mass of the raw material monomer is performed continuously over 3 hours starting from 0.5 hours after the addition of 10 parts by mass of the raw material monomer all at once.

Once the addition of 90 parts by mass of the raw material monomer is complete, metered addition of a solution obtained by dissolving 0.18 parts by mass of sodium persulfate as an initiator in 25.5 parts by mass of pure water is performed continuously over 3 hours.

Once the continuous addition of the initiator solution is complete, the temperature is lowered to 20°C, and polymerization is ended. However, in a case in which the polymerization rate falls below 50%, the temperature is raised to 60°C instead of being lowered to 20°C, a solution obtained by dissolving 2.0 parts by mass of sodium persulfate as an initiator in 10 parts by mass of pure water is added all at once, and then 3 hours of stirring is performed. The polymerization rate is subsequently measured, and polymerization is ended in a case in which the polymerization rate exceeds 80%, whereas the addition of an initiator all at once and stirring described above are repeated until the polymerization rate exceeds 80% in a case in which the polymerization rate falls below 80%.

The polymerization rate can be determined by determining the solid content from a small amount of collected water dispersion using a solids analyzer SMART SYSTEM 5 produced by CEM Corporation as described further below, calculating the mass of the polymer (amount of solids) from the solid content, and converting this mass to a proportion relative to the total charged amount of monomer. For example, when the total charged amount of monomer is 100 g and the mass of the polymer (amount of solids) determined from the solid content is 10 g, the polymerization rate is 10%.

<Methanol precipitation>

Dropwise addition of 40 mL of methanol is performed with respect to a solution obtained by dissolving a sample in 10 mL of tetrahydrofuran having a purity of 99.9 mass% or higher. A produced precipitate is filtered off, and insoluble content (methanol precipitate) remaining after filtration is collected. Note that in a situation in which dissolution in tetrahydrofuran is difficult, heating and stirring may be performed to the extent that the tetrahydrofuran does not boil.

<Measurement of glass-transition point>

The sample is heated to 170°C at 10°C/min and cooled to -40°C at 10°C/min in a nitrogen atmosphere using a differential scanning calorimeter Q-2000 produced by TA Instruments.

Next, the sample is heated to 190°C at 10°C/min, and measurement data up to 190°C is acquired.

This measurement is performed using an aluminum Tzero Pan and Tzero Hermetic Lid (produced by TA Instruments) as a sample pan and using an empty pan of the same type as a reference.

Next, a midpoint glass-transition point is determined using "Glass/Step Transition" in an analysis tool TA Universal Analysis of the Q-2000.

Although no specific limitations are placed on monomers used in step A, it is preferable to use a vinyl halide monomer such as vinyl chloride or vinylidene chloride and/or a (meth)acrylic monomer such as methyl acrylate, ethyl acrylate, methyl methacrylate, ethyl methacrylate, n-butyl acrylate, n-butyl methacrylate, 2-ethylhexyl acrylate, 2-ethylhexyl methacrylate, 2-hydroxyethyl acrylate, 2-hydroxyethyl methacrylate, glycidyl methacrylate, glycidyl acrylate, acrylonitrile, methacrylonitrile, acrylic acid, methacrylic acid, acrylamide, or N-methylolacrylamide; styrene, 2-sulfoethyl methacrylate (2-SEM), or a salt thereof (sodium salt, etc.); a phosphate ester of a methacrylate-terminal polypropylene glycol or a salt thereof (sodium salt, etc.); 2-acrylamido-2-methylpropane sulfonic acid (AMPS) or a salt thereof (sodium salt, etc.); or the like. Methyl acrylate, methyl methacrylate, acrylonitrile, methacrylonitrile, glycidyl methacrylate, and carboxyl group-containing monomers are more preferable, acrylonitrile and methyl methacrylate are even more preferable, and methyl methacrylate is further preferable.

Monomers used in step A may be mixed in specific amounts prior to polymerization and then be added continuously or be added stepwise in batches, for example. It is preferable that when the total mass of monomer is taken to be 100 parts by mass, more than 0 parts by mass and not more than 20 parts by mass of a monomer mixture is added into a polymerization machine all at once and is polymerized, and then the remainder of the monomer mixture is continuously added and polymerized.

The polymer synthesized in step A may be a copolymer obtained using a plurality of monomers or may be a homopolymer.

It is particularly preferable that the polymer synthesized in step A is a homopolymer of methyl methacrylate.

The mass proportion of structural units derived from a vinyl halide monomer in the polymer synthesized in step A is preferably 70 mass% or less, more preferably 60 mass% or less, and even more preferably 50 mass% or less relative to 100 mass% of the total mass of the polymer. In a case in which the mass proportion of a vinyl halide monomer is large, fluidity of the polymer synthesized in step A decreases, and it becomes harder for the polymer synthesized in step A to become disposed in a surface layer of the vinyl halide copolymer particles that are finally synthesized.

In a case in which a water dispersion of the polymer synthesized in step A can be isolated, the average particle diameter of the polymer in the water dispersion is preferably 20 nm or more, more preferably 30 nm or more, and even more preferably 40 nm or more. Moreover, the average particle diameter is preferably 100 nm or less, more preferably 80 nm or less, and even more preferably 70 nm or less. When the average particle diameter of the polymer synthesized in step A is within any of the ranges set forth above, this increases the rate of polymerization in step B that is performed after step A and provides good efficiency.

Note that the average particle diameter is measured by the following measurement method.

<Measurement method of average particle diameter>

An FPAR-1000 produced by Otsuka Electronics Co., Ltd. is used to perform measurement with respect to a water dispersion that has been diluted by a factor of 100, and the average particle diameter obtained as a result of cumulant analysis is taken to be the average particle diameter of a polymer contained in the water dispersion.

[[Emulsion polymerization step B]]

In step B, emulsion polymerization is performed with features that a raw material monomer group includes a vinyl halide monomer and a copolymerization monomer having a reactivity ratio r1 with vinylidene chloride of less than 0.7 and that a mass proportion constituted by the vinyl halide monomer among 100 mass% of the raw material monomer group is 60 mass% or more.

An average value for logPow of the monomer group used as a raw material in step B is preferably higher than the average value for logPow of the monomer group used as a raw material in step A. In terms of a more specific range, the average value for logPow is preferably 1.8 or more, more preferably 2.0 or more, and even more preferably 2.2 or more. As a result of the monomer group in step B having a higher logPow than the monomer group in step A, the polymer

synthesized in step A is more easily disposed in a surface layer in the vinyl halide copolymer particles that are finally synthesized. This results in a structure in which an emulsifier is not directly in contact with a polymer synthesized in step B and improves film formation life of the water dispersion.

The mass proportion of the vinyl halide monomer among 100 mass% of the raw material monomer group is 60 mass% or more, preferably 80 mass% or more, more preferably 85 mass% or more, and even more preferably 87 mass% or more. Moreover, this mass proportion is preferably 99 mass% or less, more preferably 95 mass% or less, even more preferably 93 mass% or less, and further preferably 92 mass% or less.

The mass proportion of the copolymerization monomer having a reactivity ratio r1 of less than 0.7 among 100 mass% of the raw material monomer group is preferably 4 mass% or more, more preferably 6 mass% or more, and even more preferably 8 mass% or more. Moreover, this mass proportion is preferably 20 mass% or less, more preferably 15 mass% or less, and even more preferably 12 mass% or less.

[[Polymer synthesized in step B]]

The polymer synthesized in step B includes at least structural units derived from the vinyl halide monomer and structural units derived from the copolymerization monomer having a reactivity ratio r1 with vinylidene chloride of less than 0.7 and may optionally include structural units derived from a copolymerization monomer having a reactivity ratio r1 with vinylidene chloride of 0.7 or more.

Note that the polymer synthesized in step B is a vinyl halide copolymer including structural units derived from the vinyl halide monomer as described above, but is referred to as the "polymer synthesized in step B" in order to distinguish it from the "vinyl halide copolymer" that is the final polymer obtained through the synthesis process including step A and step B.

In a case in which the synthesis process of the water dispersion of the vinyl halide copolymer includes a plurality of steps B, the composition of the polymer synthesized in step B is taken to be a mass average of each of the steps.

The mass proportion of structural units derived from the vinyl halide monomer is preferably 60 mass% or more, more preferably 80 mass% or more, even more preferably 85 mass% or more, and further preferably 87 mass% or more relative to 100 mass% of total mass of structural units derived from the vinyl halide monomer, structural units derived from the copolymerization monomer having a reactivity ratio r1 of less than 0.7, and structural units derived from the copolymerization monomer having a reactivity ratio r1 of 0.7 or more. Moreover, this mass proportion is preferably 99 mass% or less, more preferably 95 mass% or less, even more preferably 93 mass% or less, and further preferably 92 mass% or less.

The mass proportion of structural units derived from the copolymerization monomer having a reactivity ratio r1 of less than 0.7 is 4 mass% or more, preferably 6 mass% or more, and more preferably 8 mass% or more relative to 100 mass% of total mass of the polymer synthesized in step B. Moreover, this mass proportion is preferably 20 mass% or less, more preferably 15 mass% or less, and even more preferably 12 mass% or less. Through the mass proportion of structural units derived from the copolymerization monomer having a reactivity ratio r1 of less than 0.7 being within any of the ranges set forth above, a film including a layer formed from the water dispersion of the vinyl halide copolymer according to the present embodiment can display barrier properties that sufficiently preserve the quality of contents.

The mass proportion of structural units derived from the copolymerization monomer having a reactivity ratio r1 of less than 0.7 is preferably 20 mass% or less, more preferably 15 mass% or less, and even more preferably 13 mass% or less relative to 100 mass% of total mass of structural units derived from the vinyl halide monomer, structural units derived from the copolymerization monomer having a reactivity ratio r1 of less than 0.7, and structural units derived from the copolymerization monomer having a reactivity ratio r1 of 0.7 or more. Moreover, this mass proportion is preferably 1 mass% or more, more preferably 5 mass% or more, and particularly preferably 7 mass% or more.

The total mass proportion of structural units derived from the vinyl halide monomer and structural units derived from the copolymerization monomer having a reactivity ratio r1 of less than 0.7 among 100 mass% of the polymer synthesized in step B is preferably 85 mass% or more, more preferably 90 mass% or more, even more preferably 95 mass% or more, and particularly preferably 100 mass%.

The polymer synthesized in step B may optionally include structural units derived from a copolymerization monomer having a reactivity ratio r1 with vinylidene chloride of 0.7 or more.

The mass proportion of structural units derived from the copolymerization monomer having a reactivity ratio r1 with vinylidene chloride of 0.7 or more is preferably 5 mass% or less, and more preferably 3 mass% or less relative to 100 mass% of total mass of structural units derived from the vinyl halide monomer, structural units derived from the copolymerization monomer having a reactivity ratio r1 of less than 0.7, and structural units derived from the copolymerization monomer having a reactivity ratio r1 of 0.7 or more.

Through the mass proportions of the above-described components in the polymer synthesized in step B being within any of the ranges set forth above, a film including a layer formed from the water dispersion of the vinyl halide copolymer according to the present embodiment can display barrier properties that sufficiently preserve the quality of

contents.

The vinyl halide monomer is preferably vinyl chloride or vinylidene chloride, and is particularly preferably vinylidene chloride.

One vinyl halide monomer may be used individually, or two or more vinyl halide monomers may be used in combination.

Suppose that vinylidene chloride is monomer 1 (M1), and a comonomer is monomer 2 (M2). The reactivity ratio r1 with vinylidene chloride is a typical monomer reactivity ratio r1 calculated as r1 = k11/k12, where k11 is the reaction rate constant of a reaction of a radical of M1 with M1, and k12 is the reaction rate constant of a reaction of a radical of M1 with M2. A value described in Polymer Handbook Forth Edition (ISBN: 0-471-48171-8) may be adopted as the reactivity ratio r1. However, in a case in which more than one value is listed, the lowest value is adopted.

In the case of a reactivity ratio r1 that is not listed in the aforementioned document, a value in a known document is adopted, and in the case of a reactivity ratio r1 for which a value is not available in a known document, bulk polymerization, solution polymerization, or suspension polymerization may be performed to determine the reactivity ratio by the Kelen-Tudos method. In a case in which a plurality of measurements yield different values for the reactivity ratio, the lowest value among these measurements is adopted.

However, in a case in which the proportion constituted by a monomer having an unknown reactivity ratio among constituent monomers of the synthesized polymer is relatively low and in which a magnitude relationship with a threshold with which comparison is desired is the same regardless of the value of the reactivity ratio of the monomer having an unknown reactivity ratio, the reactivity ratio may be treated as unknown. For example, suppose that the mass composition of VDC/MA/"monomer having unknown reactivity ratio" is 90/8/2. When determining whether the proportion constituted by a monomer having a reactivity ratio r1 of less than 0.7 is 4 parts by mass or less, the proportion constituted by a monomer having a reactivity ratio r1 of less than 0.7 as a whole would only be 2 parts by mass even supposing that the reactivity ratio r1 of the monomer having an unknown reactivity ratio is less than 0.7. In such a case, the reactivity ratio of the monomer having an unknown reactivity ratio may be treated as unknown.

Examples of the reactivity ratio r1 with vinylidene chloride for a number of monomers are indicated below.

Butyl acrylate: 0.84
Ethyl acrylate: 0.58
Methyl acrylate: 0.7
Acrylic acid: 0.29
Acrylonitrile: 0.28
Methyl methacrylate: 0.02
Methacrylic acid: 0.15
Methacrylonitrile: 0.036
Vinyl chloride: 1.8

The copolymerization monomer having a reactivity ratio r1 with vinylidene chloride of less than 0.7 may be a known monomer, and is preferably methyl methacrylate, a nitrile group-containing monomer, or a carboxyl group-containing monomer.

One copolymerization monomer having a reactivity ratio r1 of less than 0.7 may be used individually, or two or more copolymerization monomers having a reactivity ratio r1 of less than 0.7 may be used in combination.

The nitrile group-containing monomer is preferably acrylonitrile or methacrylonitrile, and is particularly preferably methacrylonitrile.

The carboxyl group-containing monomer is preferably acrylic acid, itaconic acid, maleic acid, or methacrylic acid, and is more preferably acrylic acid or methacrylic acid.

The mass proportion of structural units derived from the nitrile group-containing monomer is preferably 1 mass% or more, more preferably 4 mass% or more, and even more preferably 6 mass% or more relative to 100 mass% of total mass of structural units derived from the vinyl halide monomer, structural units derived from the copolymerization monomer having a reactivity ratio r1 of less than 0.7, and structural units derived from the copolymerization monomer having a reactivity ratio r1 of 0.7 or more.

The monomer having a reactivity ratio r1 with vinylidene chloride of 0.7 or more may be a commonly known monomer, and is preferably vinyl chloride, methyl acrylate (hereinafter, denoted as "MA"), or butyl acrylate.

One copolymerization monomer having a reactivity ratio r1 of 0.7 or more may be used individually, or two or more copolymerization monomers having a reactivity ratio r1 of 0.7 or more may be used in combination.

As a result of copolymerization of such monomers, a film produced from the water dispersion of the vinyl halide copolymer that includes the polymer synthesized in step B has high water vapor barrier properties.

The monomer composition of the polymer synthesized in step B can be evaluated by collecting a sample by a method described below, dissolving this sample in tetrahydrofuran-d8, and performing NMR measurement.

1) This method is used in a case in which the water dispersion of the vinyl halide copolymer is available.
10 mL of the water dispersion of the vinyl halide copolymer is freeze dried, and then 0.5 g of the freeze dried product is collected. The collected freeze dried product is used as a sample to perform the subsequently described acetone precipitation and obtain an acetone precipitate. This acetone precipitate is taken to be a measurement sample.
2) This method is used in a case in which the water dispersion of the vinyl halide copolymer is not available and only a film coated with the water dispersion is available.

The vinyl halide copolymer is separated from the film coated with the vinyl halide copolymer, 0.5 g of the vinyl halide copolymer is collected, and the subsequently described acetone precipitation is performed to obtain an acetone precipitate as a measurement sample.
By using acetone in the purification processes of 1) and 2), it is possible to perform NMR measurement of the polymer synthesized in step B in a state in which the polymer synthesized in step A has been removed. Moreover, in a case in which a polymer synthesized in an emulsion polymerization step other than steps A and B (for example, a subsequently described step C) is included, a method appropriate for each polymer is adopted in addition to the subsequently described acetone precipitation in order to remove that polymer.
One of the following methods (A) to (C) is adopted, when possible, as the method by which the vinyl halide copolymer is separated from the film coated with the vinyl halide copolymer. Method (A) is adopted in a case in which method (A) is possible, method (B) is adopted in a case in which method (A) is difficult but method (B) is possible, and method (C) is adopted in a case in which methods (A) and (B) are difficult but method (C) is possible. In a case in which methods (A) to (C) are difficult, another separation means may be adopted when possible. In such a case, it is preferable to perform washing and drying to minimize the content of impurities other than the vinyl halide copolymer in the separated product. The mass proportion of the impurities is preferably 0.5 mass% or less in the measurement sample. The drying treatment conditions are set as a temperature of 60°C or lower and a treatment time of 10 hours or less. Herein, the term "impurities" denotes components that were not contained in the water dispersion of the vinyl halide copolymer before coating but have become mixed in, such as a primer or solvent, and does not include additives originally added to the water dispersion, such as an emulsifier. The amount of emulsifier in the separated product can be measured by the following procedure: i) set the mass of the dried separated product as W1; ii) wash the separated product with a large amount of pure water having a mass at least 50 times that of the separated product while making sure that the polymer does not also flow out; iii) dry the washed separated product and set the mass thereof as W2; and iv) determine the mass of emulsifier by W1 - W2.

(A) Physically peel off or scrape off the vinyl halide copolymer with tweezers or the like
(B) Chemically separate the vinyl halide copolymer using a solvent (preferably acetone) that does not dissolve the vinyl halide copolymer but that does dissolve a primer
(C) Separate the vinyl halide copolymer by eluting the vinyl halide copolymer using a solvent that dissolves the vinyl halide copolymer but does not dissolve the film serving as a substrate and then drying the vinyl halide copolymer

In a case in which the vinyl halide copolymer is separated using a solvent by method (B) or (C), the vinyl halide copolymer is dried in a drying furnace or the like to the extent that the vinyl halide copolymer does not decompose, and measurement is performed once the weight of solvent in the separated product is confirmed to be 0.5 mass% or less. The drying conditions are set as a temperature of 50°C or lower and a drying time of 10 hours or less. The drying is performed under reduced pressure when necessary.

<Acetone precipitation>

Dropwise addition of 40 mL of acetone is performed with respect to a solution obtained by dissolving a sample in 10 mL of tetrahydrofuran having a purity of 99.9 wt% or higher. A produced precipitate is filtered off, and insoluble content (acetone precipitate) remaining after filtration is collected. Note that in a situation in which dissolution in tetrahydrofuran is difficult, heating and stirring may be performed to the extent that the tetrahydrofuran does not boil.
The NMR measurement conditions are as follows.

Device: JEOL RESONANCE ECS 400 (1H), Bruker Biospin Avance 600 (13C)
Observed nucleus: 1H (399.78 MHz), 13C (150.91 MHz)
Pulse program: Single pulse (1H), zgig30 (13C)
Cumulative number: 256 times (1H), 10,000 times (13C)
Lock solvent: THF-d8
Chemical shift standard: THF (1H: 180 ppm, 13C: 67.38 ppm)

The obtained NMR spectrum is used to perform monomer assignment and integration of peaks so as to identify the composition in the copolymer.

For example, in the case of a polymer including structural units derived from vinylidene chloride, methacrylonitrile, methyl methacrylate, and acrylic acid, in a $^{13}$C-NMR spectrum, integration is performed for 80 ppm to 90 ppm to determine the content of structural units derived from vinylidene chloride, integration is performed for 110 ppm to 130 ppm to determine the content of structural units derived from methacrylonitrile, integration is performed for 170 ppm to 180 ppm to determine the content of structural units derived from methyl methacrylate, and integration is performed for 180 ppm to 200 ppm to determine the content of structural units derived from acrylic acid. The composition ratio of each monomer among the overall polymer is then calculated.

In calculation of the composition ratio described above, the amount of methyl methacrylate is determined through integration of a peak for a $COOCH_3$ group (a in the following formula). Methyl acrylate is likewise a monomer having a $COOCH_3$ group that is often copolymerized with vinylidene chloride. These monomers are distinguished through judgment of the presence or absence in a $^{1}$H-NMR spectrum of a peak for a methyl group (b in the following formula) bonded to a main chain carbon to which the $COOCH_3$ group is bonded. A peak for this methyl group is positioned at about 2 ppm and is not split because the main chain carbon to which the methyl group is bonded is not bonded to a hydrogen. In a case in which a methyl group-containing monomer other than methyl methacrylate such as methacrylonitrile, for example, is included, this can be judged because a plurality of methyl group peaks are present at around 2 ppm.

[Chem. 1]

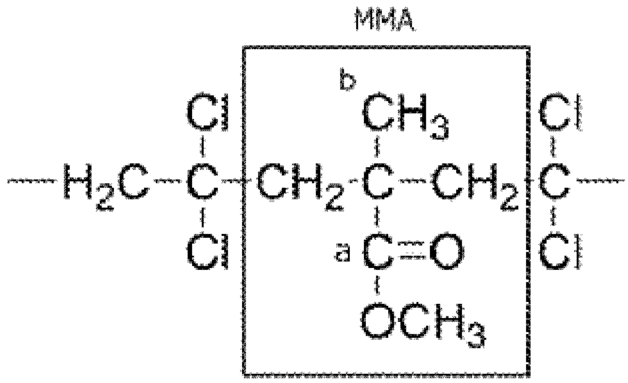

Likewise, acrylonitrile and methacrylonitrile are distinguished between based on the presence or absence of a peak for a methyl group (b in the preceding formula).

The insoluble content is subjected to additional measurement such as two-dimensional NMR measurement, infrared spectroscopy, etc., as necessary, in order to perform monomer assignment. Moreover, a copolymer having a known composition may be polymerized and then measured in the same way for comparison.

[[Emulsion polymerization step C]]

Constituent steps of the synthesis process of the water dispersion of the vinyl halide copolymer according to the present embodiment may include any emulsion polymerization step C (hereinafter, also referred to as "step C") other than step A and step B described above.

A polymer synthesized in step C is preferably 20 mass% or less, and more preferably 5 mass% or less relative to 100 mass% of total mass of the vinyl halide copolymer that is obtained after all the steps have ended.

The mass proportion of the polymer synthesized in step B is preferably 90 mass% or more, more preferably 95 mass% or more, and even more preferably 96 mass% or more relative to 100 mass% of total mass of the vinyl halide copolymer that is a constituent of the finally obtained water dispersion. Moreover, this mass proportion is preferably 99.9 mass% or less, more preferably 99 mass% or less, and even more preferably 97 mass% or less.

The total mass proportion of polymers synthesized in steps other than step B is preferably 0.1 mass% or more, more preferably 1.0 mass% or more, and even more preferably 3.0 mass% or more relative to 100 mass% of total mass of the vinyl halide copolymer that is a constituent of the finally obtained water dispersion. Moreover, this mass proportion is preferably 10.0 mass% or less, and more preferably 4.0 mass% or less.

Although mechanical stability improves as the total mass of polymers synthesized in steps other than step B increases, water vapor barrier properties tend to decrease when this total mass becomes excessively large.

A feature of the water dispersion of the vinyl halide copolymer according to the present embodiment is that upon comparison of a chromatogram obtained through measurement by solvent gradient chromatography of a purified polymer obtained through purification of the vinyl halide copolymer by the previously described methanol precipitation and a chromatogram obtained through measurement by solvent gradient chromatography of a purified polymer obtained through purification of the vinyl halide copolymer by the previously described acetone precipitation, a peak (hereinafter, also referred to as "peak I") is present that only appears in the chromatogram for the purified polymer obtained through purification by methanol precipitation.

Solvent gradient chromatography is an analysis method that, in a situation in which different types of polymers are mixed, enables separation and detection of each polymer by exploiting differences in solubility of these polymers in a solvent.

In methanol precipitation, both the polymer synthesized in step A and the polymer synthesized in step B are purified. Therefore, when the purified polymer obtained through purification of the vinyl halide copolymer in the water dispersion by methanol precipitation is measured by solvent gradient chromatography, both a peak originating from the polymer synthesized in step B and a peak originating from the polymer synthesized in step A are detected.

In contrast, the polymer synthesized in step A is removed and only the polymer synthesized in step B is purified in acetone precipitation. Therefore, when the purified polymer obtained through purification of the vinyl halide copolymer in the water dispersion by acetone precipitation is measured by solvent gradient chromatography, only a peak originating from the polymer synthesized in step B is observed.

Accordingly, peak I that is only present in the chromatogram for the purified polymer obtained by methanol precipitation and is not present in the chromatogram for the purified polymer obtained by acetone precipitation can be assigned as a peak originating from the polymer synthesized in step A. Moreover, a peak (hereinafter, also referred to as "peak II") that is present in both the chromatogram for the purified polymer obtained by methanol precipitation and the chromatogram for the purified polymer obtained by acetone precipitation can be assigned as a peak originating from the polymer synthesized in step B.

Note that the phrase "is present only in the chromatogram for the purified polymer obtained by methanol precipitation and is not present in the chromatogram for the purified polymer obtained by acetone precipitation" means that compared to the peak in the chromatogram for the purified polymer obtained by methanol precipitation, a peak appearing at the same position in a chromatogram for a purified polymer obtained by repeated purification by acetone precipitation a maximum of 3 times has a peak area of 1/10 or less (i.e., (peak area of peak for purified polymer obtained by acetone precipitation performed maximum of 3 times)/(peak area of peak for purified polymer obtained by methanol precipitation) $\leq$ 1/10).

In repeated acetone precipitation, a purified polymer obtained by acetone precipitation is dissolved in THF and subjected to acetone precipitation once again.

Each time that purification is performed by repeated acetone precipitation, the mass of polymer decreases. Therefore, the amount of solvent used in repetitions is set in proportion to the amount of sample to be purified in order that the polymer concentration does not change in each repetition. The use of 10 mL of tetrahydrofuran and 40 mL of acetone relative to 0.5 g of a sample is used as a reference. For example, in a case in which 0.4 g of a sample is to be purified, the amount of tetrahydrofuran is set as 10 mL $\times$ 0.4/0.5 = 8 mL, and the amount of acetone is set as 40 mL $\times$ 0.4/0.5 = 32 mL.

Note that in each acetone precipitation or methanol precipitation in the present disclosure, the acetone or methanol is slowly added dropwise over 1 hour, and the solution is constantly stirred using a magnetic stirrer during dropwise addition. After performing filtration, the insoluble content is vacuum dried at 20°C for at least 1 day to cause volatilization of solvent.

<Measurement method by solvent gradient chromatography>

A polymer obtained by collecting 0.5 g of a dried sample of the water dispersion of the vinyl halide copolymer and purifying this sample by methanol precipitation is taken to be a polymer Me, and a polymer obtained by collecting 0.5 g of a dried sample of the water dispersion of the vinyl halide copolymer and purifying this sample by acetone precipitation is taken to be a polymer Ac. The dried sample of the water dispersion of the vinyl halide copolymer is obtained by separation from a film coated with the water dispersion or by coating the water dispersion onto aluminum foil such as to have a dry coating weight of 10 $g/m^2$, performing 1 minute of drying in a 100°C oven, and then peeling the coating from the aluminum foil.

A polymer for which measurement is to be performed from among the polymer Me and the polymer Ac is added to tetrahydrofuran such as to have a specific concentration, and is stirred to cause dissolution and thereby obtain a measurement sample. During the above, heating and stirring may be performed to the extent that the tetrahydrofuran does not boil. In a case in which turbidity is visually observed even upon heating and stirring at 60°C, centrifugation (12,000 rpm $\times$ 10 minutes) is performed, and then the supernatant is taken to be a measurement sample.

The measurement sample is measured by solvent gradient chromatography under the following conditions. A column that is within one month of installation in the device is used.

Device: HITACHI Chromaster (produced by Hitachi High-Tech Science Corporation)
Analysis software: Waters Empower 3
Column: YMC-Pack ODS-AM (produced by YMC Co., Ltd.; 6.0 mm I.D. × 150 mm; particle diameter: 5 μm; pore diameter: 12 nm)
Column temperature: 30°C
Pipe length: Approximately 50 cm from column outlet to detector
Analysis chamber temperature: 20°C ± 5°C
Detection: UV detector
Flow rate: 1.0 mL/min
Mobile phase: A = tetrahydrofuran (THF), B = acetonitrile
Injection volume: 10 μL
Washing conditions: 120 seconds washing × 2, washing port 20 seconds
Gradient conditions: Shown below in Table 1

[Table 1]

| Time (min) | A% | B% |
|---|---|---|
| 0 | 0 | 100 |
| 10 | 100 | 0 |
| 13 | 100 | 0 |
| 13.1 | 0 | 100 |
| 27.0 | 0 | 100 |

Depending on the type of measurement sample, what is referred to as "carryover" where measurement sample remaining in the device becomes mixed into subsequent measurements may occur. Measurement of another measurement sample cannot be performed in a state in which carryover has occurred. It is essential to perform blank measurement when switching measurement samples and to confirm that there is no carryover. In a situation in which carryover does occur, a next measurement is performed after the device is washed as appropriate and the absence of carryover in a blank is confirmed.

In the chromatogram of the polymer Me, the area of a peak (peak I) that is assigned as originating from the polymer synthesized in step A can be used to determine the concentration c of the polymer synthesized in step A in the measurement sample. This concentration c can then be used to determine the total mass of the polymer synthesized in step A as a proportion relative to the total mass of the vinyl halide copolymer (polymer Me). For example, in a case in which the concentration c of the polymer synthesized in step A in the measurement sample is determined to be 0.1 mg/mL, the proportion can be calculated as 0.1/(10) × 100 = 1 mass% using the concentration (10 mg/mL) of the overall purified polymer Me.

The content of the polymer to which peak I is assigned, as determined from the peak area of peak I in this manner, is preferably 0.1 mass% or more, more preferably 1.0 mass% or more, and even more preferably 3.0 mass% or more relative to 100 mass% of total mass of the vinyl halide copolymer. Moreover, this content is preferably 10.0 mass% or less, and more preferably 4.0 mass% or less.

The detection time of an apex of the peak (peak I) that is assigned to originating from the polymer synthesized in step A is less than 9 minutes. When the detection time of the apex of peak I is within this range, this indicates that the monomer group used in synthesis of the polymer synthesized in step A has an n-octanol/water partition coefficient (logPow) with an average value of 2.2 or less. The detection time of the apex of peak I is preferably less than 8 minutes, more preferably less than 7.5 minutes, and even more preferably 7.2 minutes or less.

Moreover, the detection time of the apex of peak I is preferably 6 minutes or more, more preferably 6.5 minutes or more, and even more preferably 6.7 minutes or more.

The detection time of the apex of peak I is preferably not less than 6 minutes and less than 8 minutes, more preferably not less than 6.5 minutes and less than 7.5 minutes, and even more preferably not less than 6.7 minutes and not more than 7.2 minutes. When the detection time of the apex of peak I is within any of these ranges, the polymer synthesized in step A can be identified as a homopolymer of methyl methacrylate or a copolymer having methyl methacrylate as a main component, and a detection time that is within a more preferable range indicates that a higher proportion is constituted by constitutional units derived from methyl methacrylate.

When the detection time of the apex of peak I is within any of the ranges set forth above, the concentration c of the polymer synthesized in step A in the measurement sample can be determined by the following procedure.

In this case, the polymer synthesized in step A can be identified as a homopolymer of methyl methacrylate or a copolymer having methyl methacrylate as a main component as described above.

When the detection time of the apex of peak I is within any of the ranges set forth above, constitutional units derived from methyl methacrylate make almost all the contribution to the detected absorption strength, and thus peak I can be approximated as originating from a homopolymer of methyl methacrylate. A homopolymer of methyl methacrylate is obtained by polymerizing methyl methacrylate using the previously described emulsion polymerization method for Tg measurement, subsequently freeze drying the water dispersion, and then performing methanol precipitation. The obtained sample is referred to as a PMMA standard.

The PMMA standard is dissolved in tetrahydrofuran with at least three concentration levels, and a calibration curve expressing a relationship between an area value of peak I and concentration is prepared. The calibration curve is fitted to a linear function by the least-squares method. A peak area value X for the polymer Me is substituted into the determined function to determine the concentration c. However, in a case in which the determined concentration c is larger than a largest value or smaller than a smallest value for the standard used in calibration curve preparation, data is added until c is smaller than the largest value and larger than the smallest value for the standard, and then fitting is performed once again using the additional data.

In a case in which peak I cannot be attributed to a homopolymer of methyl methacrylate or a copolymer having methyl methacrylate as a main component (i.e., a case in which the detection time of the apex of peak I is not a time that is not less than 6 minutes and less than 8 minutes), a calibration curve is newly prepared, and then the concentration c is determined.

A polymer having the same composition as the polymer synthesized in step A is prepared and is dissolved in tetrahydrofuran with at least three concentration levels to prepare a standard. Once a peak position of the standard is confirmed to be the same as the position of peak I, a calibration curve expressing a relationship between an area value of peak I and concentration is prepared. The calibration curve is fitted to a linear function by the least-squares method. A peak area value X for the polymer Me is substituted into the determined function to determine the concentration c. However, in a case in which the determined concentration c is larger than a largest value or smaller than a smallest value for the standard used in calibration curve preparation, data is added until c is smaller than the largest value and larger than the smallest value for the standard, and then fitting is performed once again using the additional data.

In a case in which the polymer synthesized in step A can be isolated, that polymer is used as the polymer for preparing a standard that has the same composition as the polymer synthesized in step A. Note that an isolated state means not including a polymer that is produced in another step, though an additive such as an emulsifier that is added in step A may be included. In a case in which the polymer cannot be isolated, a standard polymer is produced by the previously described emulsion polymerization method for Tg measurement using a monomer mixture mixed with the mass composition of the monomer group used in step A when this mass composition is known, or after identifying the mass composition of monomers by analysis when this mass composition is not known. A monomer used to produce the standard polymer is analyzed by solvent gradient chromatography, and in a case in which the detection time of a peak is within an error range of ±0.5 minutes compared to the detection time of the peak for which calibration curve preparation is desired, the standard polymer may be used in calibration curve preparation as previously described. Note that in a case in which the error of the detection time of the peak is not within ±0.5 minutes, in a case in which the polymerization rate of the standard polymer is less than 80%, or in a case in which a peak for the standard polymer is split into a plurality of peaks, this polymer is not suitable as a standard polymer. These cases may arise under the influence of molecular weight, unevenness of composition arising during polymerization, or the like, and thus a suitable sample having a peak detection time error within ±0.5 minutes, a polymerization rate of 80% or more, and a unimodal peak is produced by adjusting the amount of initiator or reductant, the feeding conditions of monomer, the reaction time, the temperature, and so forth in the previously described emulsion polymerization method for Tg measurement.

The method by which the monomer composition is identified may be through NMR measurement, IR measurement, or the like, for example, of a sample of the polymer of peak I that is separated by performing solvent gradient chromatography. Note that the sample may be separated by performing solvent gradient chromatography a plurality of times in a situation in which the required amount of the sample cannot be obtained by performing solvent gradient chromatography just once. Moreover, since acetone-soluble content obtained when performing acetone precipitation is rich in the polymer synthesized in step A, the composition may be identified by analyzing the acetone-soluble content.

Determination of peak area in solvent gradient chromatography is performed as follows.

A baseline is drawn such as to join before and after the peak (from peak onset to peak offset), and then the area of a region surrounded by the peak and the baseline is determined. The units are set as mV·sec.

In a case in which a plurality of steps A are present and in which a plurality of peaks I assigned to the polymer

synthesized in step A are present, the detection time to taken to be an area-weighted average. For example, when a peak having an area of 10 and a detection time of 5 and a peak having an area of 20 and a detection time of 10 are present, the detection time is determined as $(10 \times 5 + 20 \times 10)/(10 + 20) = 8.33$.

The total mass of the polymer synthesized in step A is determined by calculating the peak area, concentration, and mass for each peak using the calibration curve, and then calculating the sum of the masses obtained for the peaks.

Note that the detection time of a peak typically varies to a certain extent due to factors that are difficult to identify such as the condition of a column. Therefore, the obtained detection time is corrected by the following formula.

$$t_p = t_m - (t_0 - 6.9)$$

($t_0$: detection time of peak obtained when PMMA standard is measured individually; $t_m$: detection time before correction; $t_p$: detection time after correction)

(Characteristics of water dispersion of vinyl halide copolymer)

The maximum melting peak temperature (maximum melting point) and the melting peak area of the water dispersion of the vinyl halide copolymer can be evaluated using a sample produced by either of the following methods (i) or (ii). The maximum melting peak temperature is preferably 170°C or lower, and particularly preferably 160°C or lower.

When the area of a melting peak for the water dispersion of the vinyl halide copolymer that has a melting peak temperature of 170°C or higher is taken to be S1 and the area of a melting peak for the water dispersion of the vinyl halide copolymer that has a melting peak temperature of lower than 170°C is taken to be S2, S1/(S1 + S2) is preferably not less than 0 and not more than 0.33, particularly preferably 0.31 or less, and even more preferably 0.26 or less.

(i) This method is used in a case in which the water dispersion of the vinyl halide copolymer is available.

The water dispersion of the vinyl halide copolymer is coated onto an aluminum plate using a Mayer bar such as to have a dry coating weight of 10 $g/m^2$ and is dried for 1 minute in an oven held at 100°C. The dried film is peeled off within 5 minutes using tweezers to collect an individual film of the vinyl halide copolymer. A sample of 5 mg is collected from this individual film and is used for measurement.

Note that in a case in which an additive such as a crystal nucleating agent is added to the water dispersion, sample preparation and measurement are performed using the water dispersion in a state in which the additive has been added.

(ii) This method is used in a case in which the water dispersion of the vinyl halide copolymer is not available and only a film coated with the water dispersion is available.

The vinyl halide copolymer is separated from the film coated with the vinyl halide copolymer, and then 5 mg thereof is collected and is used for measurement.

One of the following methods (A) to (C) is adopted, when possible, as the method by which the vinyl halide copolymer is separated from the film coated with the vinyl halide copolymer. Method (A) is adopted in a case in which method (A) is possible, method (B) is adopted in a case in which method (A) is difficult but method (B) is possible, and method (C) is adopted in a case in which methods (A) and (B) are difficult but method (C) is possible. In a case in which methods (A) to (C) are difficult, another separation means may be adopted when possible. In such a case, it is preferable to perform washing and drying to minimize the content of impurities other than the vinyl halide copolymer in the separated product. The mass proportion of the impurities is preferably 0.5 wt% or less in the measurement sample. The drying treatment conditions are set as a temperature of 60°C or lower and a treatment time of 10 hours or less. Herein, the term "impurities" denotes components that were not contained in the water dispersion of the vinyl halide copolymer before coating but have become mixed in, such as a primer or solvent, and does not include additives originally added to the water dispersion, such as an emulsifier. The amount of emulsifier in the separated product can be measured by the following procedure: i) set the mass of the dried separated product as W1; ii) wash the separated product with a large amount of pure water having a mass at least 50 times that of the separated product while making sure that the polymer does not also flow out; iii) dry the washed separated product and set the mass thereof as W2; and iv) determine the mass of emulsifier by W1 - W2.

(A) Physically peel off or scrape off the vinyl halide copolymer with tweezers or the like
(B) Chemically separate the vinyl halide copolymer using a solvent (preferably acetone) that does not dissolve the vinyl halide copolymer but that does dissolve a primer
(C) Separate the vinyl halide copolymer by eluting the vinyl halide copolymer using a solvent that dissolves the vinyl halide copolymer but does not dissolve the film serving as a substrate and then drying the vinyl halide copolymer

In a case in which the vinyl halide copolymer is separated using a solvent by method (B) or (C), the vinyl halide copolymer is dried in a drying furnace or the like to the extent that the vinyl halide copolymer does not decompose, and measurement is performed once the weight of solvent in the separated product is confirmed to be 0.5 wt% or less. The drying conditions are set as a temperature of 50°C or lower and a drying time of 10 hours or less. The drying is performed under reduced pressure when necessary.
The sample collected by the method described above is heated to 170°C at 10°C/min and cooled to -40°C at 10°C/min in a nitrogen atmosphere using a differential scanning calorimeter Q-2000 produced by TA Instruments. Next, the sample is heated to 190°C at 10°C/min, and measurement data up to 190°C is acquired. Of the acquired measurement data up to 190°C, data for 180°C or higher is not used because decomposition of vinylidene chloride begins at 180°C or higher, and measurement values from -40°C to 180°C in second heating are used to determine the maximum melting peak temperature.
This measurement is performed using an aluminum Tzero Pan and Tzero Hermetic Lid (produced by TA Instruments) as a sample pan and using an empty pan of the same type as a reference. In other words, the maximum melting peak temperature is calculated based on a value obtained by subtracting a measurement result for the empty pan from a measurement result for the sample.

1q

Next, a baseline is drawn by one of the following methods, the area of a melting peak at lower than 170°C is calculated using Integrate Peak Linear in an analysis tool TA Universal Analysis of the Q-2000, and this area is taken to be S2. S2 is set as 0 in a situation in which there is not a melting peak at lower than 170°C.
Also, a baseline is drawn by one of the following methods, the area of a melting peak at 170°C or higher is calculated using Integrate Peak Linear in the analysis tool TA Universal Analysis of the Q-2000, and this area is taken to be S1. S1 is set as 0 in a situation in which there is not a melting peak at 170°C or higher.
The determined values of S1 and S2 are rounded to one decimal place.
In some cases, the baseline is not on the same straight line. Such examples are described in a document "Inorganic Materials, vol. 3, Jul. 271-283 (1996)".
A number of examples of baseline drawing methods are described below. In a case in which there are a plurality of peaks, drawing of a baseline and calculation of area are performed for each peak. Note that in the following cases, when a plurality of tangents can be drawn, a tangent having a largest absolute value for gradient is adopted as a tangent for that curve.

(I) In a case in which one tangent touching the curve at a positive side and a negative side of a peak can be drawn, the tangent touching the curve at the positive side and the negative side is set as the baseline.
(II) In a case that does not correspond to (I) and in which a peak is sandwiched between lines parallel to the horizontal axis at both the positive side and the negative side of the peak, a line joining points at the positive side and the negative side where a heat absorption peak ceases to be parallel to the horizontal axis (i.e., points where there is a positive or negative gradient) is set as the baseline.
(III) In a case that does not correspond to (I) and (II) and in which one of the positive side and the negative side of a peak is a line parallel to the horizontal axis and the other of the positive side and the negative side is a curve, a tangent to the curved side is drawn starting from a point at which the line parallel to the horizontal axis ceases to be parallel to the horizontal axis, and this tangent is set as the baseline.
(IV) In a case that does not correspond to any of (I), (II), and (III) and in which the positive side of the peak is cut off by the upper limit of measurement of 180°C, a tangent to the negative side of the peak is drawn starting at a point of 180°C and this tangent is set as the baseline. Note that in a case in which the negative side of the peak is a line that is parallel to the horizontal axis, a line joining the start point and a point at which the line ceases to be parallel to the horizontal axis is set as the baseline.

(Conditions of emulsion polymerization)

The water dispersion of the vinyl halide copolymer according to the present embodiment can be produced by performing emulsion polymerization of a monomer mixture in each step, inclusive of steps A and B. Although no specific limitations are made, the emulsion polymerization is normally performed at a temperature of 30°C to 70°C. The polymerization temperature is preferably within a range of 40°C to 60°C. Setting the polymerization temperature as 70°C or lower is preferable because this can inhibit decomposition of raw materials during polymerization. Setting the polymerization temperature as 30°C or higher can increase the rate of polymerization, and thus results in better polymerization efficiency.
Since the polymer synthesized in step B is a copolymer that includes a copolymerization monomer having a

reactivity ratio r1 with vinylidene chloride of less than 0.7 (i.e., a monomer that does not readily react with vinylidene chloride) and a vinyl halide monomer, the copolymerization monomer having a reactivity ratio r1 of less than 0.7 is consumed preferentially over the vinyl halide monomer in a reactor. Accordingly, in a case in which unreacted monomer accumulates during the reaction, the unreacted monomer is a mixed monomer that is rich in the vinyl halide monomer compared to the charged amount. Consequently, a block that is rich in the vinyl halide monomer is formed in the copolymer during the final stage of polymerization, resulting in the polymer having a high melting point. In a case in which this is evident, the produced copolymer has two melting peaks, and the area of a melting peak at 170°C or higher increases with increasing formation of vinyl halide monomer blocks.

A water dispersion in which many blocks that are rich in a vinyl halide monomer are formed is susceptible to film formation defects associated with crystallization that occurs with such blocks as a start point during long-term storage.

Therefore, in order to improve film formation properties after long-term storage, it is vital to polymerize a copolymer having a small melting peak area at 170°C or higher, and thus having a small amount of vinyl halide monomer-rich blocks.

Although no specific limitations are placed on the method by which the area of a melting peak for the polymer at 170°C or higher is controlled, any of the following methods or a combination thereof can be adopted.

Method 1 of controlling area of melting peak at 170°C or higher

The vinyl halide monomer and the copolymerization monomer having a reactivity ratio r1 of less than 0.7 that are used in emulsion polymerization in step B may, for example, be mixed in advance in specific amounts prior to polymerization and may then be added continuously or be added stepwise in batches. In the case of continuous or stepwise addition, the additive amount of the vinyl halide monomer and the copolymerization monomer having a reactivity ratio r1 of less than 0.7 that is added per 1 hour is preferably not more than the amount of the vinyl halide monomer and the copolymerization monomer having a reactivity ratio r1 of less than 0.7 that is consumed in polymerization per 1 hour, and is preferably 95 mass% or less, more preferably 90 mass% or less, and even more preferably 85 mass% or less of the total amount of the vinyl halide monomer and the copolymerization monomer having a reactivity ratio r1 of less than 0.7 that is consumed in polymerization per 1 hour.

In a case in which the polymerization temperature is 50°C, for example, 80 parts by mass of monomer raw material relative to 100 parts by mass of total mass of the added vinyl halide monomer and copolymerization monomer having a reactivity ratio r1 of less than 0.7 is preferably added over 20 hours or more, particularly preferably added over 25 hours or more, and even more preferably added over 30 hours or more. It is preferable to optimize the continuous or stepwise addition time depending on the polymerization temperature. A preferred embodiment for a case in which a seed latex synthesized in step A is not used as a raw material is a method in which the monomers are added as a batch in an initial stage of polymerization and then the remaining amount thereof is subsequently continuously added. For example, 1 part by mass to 30 parts by mass of the vinyl halide monomer and the copolymerization monomer having a reactivity ratio r1 of less than 0.7 relative to 100 parts by mass of total mass of the vinyl halide monomer and the copolymerization monomer having a reactivity ratio r1 of less than 0.7 included in the raw material monomer may be added at the start of polymerization, and then the vinyl halide monomer and the copolymerization monomer having a reactivity ratio r1 of less than 0.7 may subsequently be added in the foregoing preferred ratio per 1 hour. By performing continuous addition of the monomers at the rate set forth above, accumulation of unreacted monomer in a reactor can be reduced, and, as a result, the area of a melting peak for the copolymer at 170°C or higher can be reduced.

The use of a seed latex synthesized in step A as a raw material increases the rate of polymerization of the raw material monomer and can reduce accumulation of unreacted monomer. Therefore, it is preferable that a seed latex synthesized in step A is used as a raw material. In one preferred embodiment, the monomers are continuously added over 25 hours into a polymerization machine in which the water dispersion synthesized in step A is present.

Method 2 of controlling area of melting peak at 170°C or higher

The total amount of a polymerization initiator added during polymerization is preferably 0.015 parts by mass or more, more preferably 0.04 parts by mass or more, and particularly preferably 0.08 parts by mass or more relative to 100 parts by mass of the polymer synthesized in step B. By adding the polymerization initiator in a total amount that is within any of the ranges set forth above, accumulation of unreacted monomer in a reactor can be reduced, and, as a result, the area of a melting peak for the copolymer at 170°C or higher can be reduced.

The polymerization initiator is preferably continuously added over a time that is at least as long as the time over which the monomers are continuously added.

In addition, it is preferable to add a polymerization activator for accelerating radical decomposition of the initiator.

Method 3 of controlling area of melting peak at 170°C or higher

In emulsion polymerization of the polymer synthesized in step B, addition of an initiator, a polymerization activator, and/or an emulsifier may be continued until the internal pressure drops after continuous addition of the monomers is complete, or this addition may be ended before the internal pressure drops. By ending polymerization before the internal pressure drops, unreacted monomer rich in the vinyl halide monomer that has accumulated in a reactor can be left unreacted, and, as a result, the area of a melting peak for the copolymer at 170°C or higher can be reduced.

Method 4 of controlling area of melting peak at 170°C or higher

In this method, the proportion constituted by the vinyl halide monomer in the raw material monomer is reduced.
By reducing the proportion constituted by the vinyl halide monomer, the accumulated amount of the vinyl halide monomer in a final stage of polymerization can be reduced, and, as a result, the area of a melting peak for the copolymer at 170°C or higher can be reduced.
Examples of surfactants that can be used in emulsion polymerization of the water dispersion of the vinyl halide copolymer in step A and step B include anionic surfactants such as alkyl sulfate ester salts, alkylbenzenesulfonate salts, alkyl sulfosuccinate salts, alkyl diphenyl ether disulfonate salts, and alkylsulfonate salts.
Examples of polymerization initiators that may be used include persulfates such as sodium persulfate and potassium persulfate, and peroxides such as hydrogen peroxide, t-butyl hydroperoxide, and cumene hydroperoxide. A persulfate is preferable in the polymerization in step A. t-Butyl hydroperoxide is preferable in the polymerization in step B.
It is preferable that a polymerization activator such as sodium hydrogen sulfite or sodium D-araboascorbate, for example, that accelerates radical decomposition of the initiator is added as a polymerization activator.
These polymerization additives are not specifically limited and may be of types that are conventionally preferably used in this technical field, for example.
The vinyl halide copolymer particles contained in the water dispersion of the vinyl halide copolymer according to the present embodiment are not specifically limited but preferably have an average particle diameter of 10 nm to 1,000 nm. When the average particle diameter is within this range, the water dispersion has good preservation stability and improved coatability.
The average particle diameter of the vinyl halide copolymer particles is more preferably 200 nm or less, even more preferably 180 nm or less, further preferably 150 nm or less, and particularly preferably 140 nm or less. The vinyl halide copolymer according to the present embodiment includes constitutional units derived from a copolymerization monomer having a reactivity ratio r1 with vinylidene chloride of less than 0.7. A vinyl halide copolymer that includes such constitutional units tends to readily crystallize and have shorter film formation life. Crystallization proceeds through processes of nucleation and nucleus growth. However, in the state of a water dispersion, nuclei are restricted by the particle size and thus cannot grow beyond the particle size. By reducing the average particle diameter, it is possible to reduce the size to which crystallization can progress per one formed crystal nucleus, and thus it is possible to suppress crystallization in the water dispersion as a whole and to extend film formation life.
Moreover, the average particle diameter of the vinyl halide copolymer particles is more preferably 100 nm or more, even more preferably 110 nm or more, and particularly preferably 120 nm or more. An excessively small average particle diameter tends to make it difficult to obtain a smooth coating film because the viscosity of the water dispersion increases. A coating film that is not smooth has poor barrier properties because gas permeates through a thin section of the film. In addition, a coating film that is not smooth has poor transparency because the non-uniform surface thereof causes scattering of light. Moreover, surface scattering of light increases the yellowness index YI of a film that includes a layer formed from the vinyl halide copolymer. Through design of the water dispersion to within any of the ranges set forth above, it is possible to obtain a water dispersion with which it is easy to obtain a smooth coating film.
Note that the yellowness index YI can be determined using a spectrophotometer CM-5 produced by Konica Minolta Inc.
The solid content of the water dispersion of the vinyl halide copolymer according to the present embodiment is preferably 10 mass% or more, more preferably 40% or more, even more preferably 50% or more, further preferably more than 50%, and particularly preferably more than 58%. A higher solid content increases the coating weight per one coating and thus reduces the number of coatings required until the target film thickness is achieved and increases coated film productivity. In addition, it becomes possible to shorten the time that the water dispersion is exposed to heat during drying and to inhibit decomposition of the vinyl halide copolymer and discoloration in a coating film. The vinyl halide copolymer according to the present embodiment includes constitutional units derived from a copolymerization monomer having a reactivity ratio r1 with vinylidene chloride of less than 0.7. Although a vinyl halide copolymer including such constitutional units has a disadvantage of being particularly susceptible to yellow discoloring due to heat, shortening the time that the vinyl halide copolymer is exposed to heat during drying contributes to mitigating this disadvantage.
Note that "solid content" in the water dispersion according to the present embodiment refers to the proportion

constituted by the total mass of all solid components contained in the water dispersion and may include just the vinyl halide copolymer or may also include subsequently described additives.

In a case in which the solid content includes the mass proportion of components other than the vinyl halide copolymer, the mass proportion of the components other than the vinyl halide copolymer is preferably 7 mass% or less relative to 100 mass% of the water dispersion.

Measurement of solid content can be performed by the following method.

<Measurement of solid content>

After measuring out 2.5 g of the water dispersion into a solids analyzer SMART SYSTEM 5 produced by CEM Corporation, the water dispersion is dried in an environment of 20°C and 50% RH to perform measurement. The results of three measurements are averaged, and the solid content is calculated by a formula: (dry mass/mass of water dispersion) $\times$ 100.

The water dispersion of the vinyl halide copolymer according to the present embodiment preferably contains a crystal nucleating agent. The crystal nucleating agent is an additive that promotes crystallization of a film formed using the water dispersion, and a known crystal nucleating agent that promotes resin crystallization can be used.

Examples of such crystal nucleating agents include phosphoric acid ester metal salts, benzoic acid metal salts, pimelic acid metal salts, rosin metal salts, benzylidene sorbitol, quinacridone, cyanine blue, oxalic acid metal salts, stearic acid metal salts, ionomers, high melting point PET, carbon black, metal oxides, metal sulfates, kaolin, clay, high melting point polyamide, crystalline resins having different compositions from the vinyl halide copolymer according to the present embodiment described above, silica, titanium oxide, waxes, and highly crystalline vinyl halide copolymer particles differing from the vinyl halide copolymer according to the present embodiment described above. One of these crystal nucleating agents may be used, or two or more of these crystal nucleating agents may be used together.

Silica, titanium oxide, waxes, and highly crystalline vinyl halide copolymer particles are preferable, and waxes and highly crystalline vinyl halide copolymer particles are particularly preferable.

The content of the crystal nucleating agent is preferably 20 parts by mass or less, more preferably 10 parts by mass or less, even more preferably 5 parts by mass or less, and further preferably 2 parts by mass or less relative to 100 parts by mass of the vinyl halide copolymer. Moreover, the content of the crystal nucleating agent is preferably more than 0 parts by mass, and more preferably 0.05 parts by mass or more.

In a case in which a plurality of crystal nucleating agents are added, the total amount thereof is used.

In the present specification, the term "wax" is understood to refer to any natural or synthetic wax. Non-limiting examples include Japan wax, lacquer wax, sugarcane wax, palm wax, candelilla wax, jojoba oil, beeswax, whale wax, Chinese wax, wool wax, FT wax, paraffin wax, microwax, carnauba wax, beeswax, Chinese insect wax, ozokerite, polyolefin wax, montan wax, and esters thereof.

The highly crystalline vinyl halide copolymer particles have a melting peak area ratio S1/(S1 + S2) of more than 0.33. The maximum melting peak temperature thereof is 160°C or higher, and particularly preferably 170°C or higher. The maximum melting peak temperature is measured by the previously described melting peak measurement method. Note that the maximum peak temperature at 180°C or lower is used.

The highly crystalline vinyl halide copolymer particles are preferably vinylidene chloride copolymer particles, and are particularly preferably particles of a vinylidene chloride copolymer that is obtained through copolymerization of 91 parts by mass or more of vinylidene chloride relative to 100 parts by mass of the vinylidene chloride copolymer.

By adding such crystal nucleating agents, progression of crystallization is promoted after film formation such that a coating film displays high water vapor barrier properties.

The water dispersion of the vinyl halide copolymer according to the present embodiment may contain various components that are typically used such as oxidants, defoamers, rheological modifiers, thickeners, dispersants, stabilizers (surfactants, etc.), humectants, plasticizers, colorants, and silicone oil, for example, as necessary. Moreover, a light stabilizer, an ultraviolet absorber, a silane coupling agent, an inorganic filler, a coloring pigment, an extender pigment, an oxidant, or the like may be compounded with the water dispersion and used as necessary.

The content of an oxidant is preferably 0.01 mass or more, and particularly preferably 0.05 parts or more relative to 100 parts by mass of the vinyl halide copolymer. The addition of an oxidant can inhibit discoloration after coating of the water dispersion on a film. The oxidant is preferably an oxygen bleach, more preferably a peroxide (hydrogen peroxide, etc.), a persulfate, a percarbonate, or peracetic acid, and is even more preferably hydrogen peroxide.

A solvent of the water dispersion of the vinyl halide copolymer according to the present embodiment may be just water or may include water and another solvent (for example, an alcohol or acetone). In a case in which another solvent is included, the amount thereof is preferably 10 parts by mass or less relative to 100 parts by mass of water.

(Weight-average molecular weight of vinyl halide copolymer)

The weight-average molecular weight of the vinyl halide copolymer according to the present embodiment is preferably 300,000 or less, more preferably 200,000 or less, even more preferably 150,000 or less, and particularly preferably 120,000 or less.

In a case in which the weight-average molecular weight is within any of the ranges set forth above, this indicates that the water dispersion of the vinyl halide copolymer according to the present embodiment has been polymerized with a sufficient rate of polymerization. Moreover, in this case, there tends to be few vinyl halide monomer blocks such as previously described, and the water dispersion tends to have excellent film formation life. In addition, there is a sufficiently high rate of crystallization after film formation, and thus excellent barrier properties tend to be displayed in a short time after coating.

The weight-average molecular weight of the vinyl halide copolymer is preferably 60,000 or more, and more preferably 80,000 or more. A vinyl halide copolymer having a low weight-average molecular weight tends to have a fast rate of crystallization. When the weight-average molecular weight is within any of the ranges set forth above, the water dispersion of the vinyl halide copolymer tends to have excellent film formation life.

The weight-average molecular weight can be determined by gel permeation chromatography (GCP) under the following conditions using a calibration curve for a standard polystyrene product.

(Device): Prominence (produced by Shimadzu Corporation)
(Device configuration):

Liquid feeding unit: LC-20AD
Degasser: DGC-20A
Autosampler: SIL-20A HT
Detector: RID-10A
Column oven: CTO-20A
Analyzer: LCsolution

(Used columns):

TSKgel GMHXL (produced by Tosoh Corporation)
TSKgel G4000HXL (produced by Tosoh Corporation)

(Carrier): Tetrahydrofuran (THF)
(Detector): RI detector
(Measurement temperature): 40°C
(Flow rate): 1.0 mL/min
(Sample concentration): 0.3% solution
(Injection volume): 100 μL

(Surface tension of water dispersion)

The surface tension of the water dispersion of the vinyl halide copolymer according to the present embodiment is preferably less than 48 mN/m, and particularly preferably less than 45 mN/m. A water dispersion having a surface tension within any of these ranges tends to have excellent stability during long-term storage. In addition, since stability during high-speed shearing also tends to be excellent, this enables high-speed coating and provides high productivity during coating. Furthermore, excellent wettability facilitates the formation of a smooth coating film even in high-speed coating. A coating film that is not smooth has poor barrier properties because gas permeates through a thin section of the film. In addition, a coating film that is not smooth has poor transparency because the non-uniform surface thereof causes scattering of light. Moreover, surface scattering of light increases the yellowness index YI of a film that includes a layer formed from the vinyl halide copolymer.

Note that the yellowness index YI can be determined using a spectrophotometer CM-5 produced by Konica Minolta Inc.

Moreover, the surface tension of the water dispersion according to the present embodiment is preferably 20 mN/m or more, more preferably 30 mN/m or more, even more preferably 35 mN/m or more, and particularly preferably 40 mN/m or more. When the surface tension is within any of these ranges, the occurrence of external appearance defects due to low surface tension is inhibited, and thus the water dispersion yields a film having excellent transparency and external appearance.

The surface tension can be measured by the platinum plate method in an environment of 20°C and 50% RH using a fully automatic surface tensiometer CBVP-Z (produced by Kyowa Interface Science Co., Ltd.).
The water dispersion of the vinyl halide copolymer according to the present embodiment can be used as a coating material of a film used for blister packaging or the like.

[Film]

A film according to the present embodiment includes a layer formed by coating the water dispersion of the vinyl halide copolymer according to the present embodiment set forth above. This layer contains at least the above-described vinyl halide copolymer and may be a layer that is formed of only the above-described vinyl halide copolymer.
The film according to the present embodiment preferably includes the layer formed by coating the water dispersion of the vinyl halide copolymer according to the present embodiment on a film substrate. The film substrate is not specifically limited and representative examples thereof include films made of polyvinyl chloride, polyester, polyamide, and polypropylene. A film made of polyvinyl chloride is most typically used. The thickness of the film substrate varies depending on the material that is used, but is normally 8 μm to 300 μm.
In addition to the layer formed by coating the water dispersion of the vinyl halide copolymer, the film according to the present embodiment may optionally include a layer of a copolymer that is functionally adjusted mainly using a monomer other than a vinyl halide that has high polymerization activity. For example, a primer may be formed on the film substrate as such a layer using an aqueous resin emulsion or an acrylic dispersion, and the layer formed by coating the water dispersion of the vinyl halide copolymer according to the present embodiment described above may be provided on this primer.
The film according to the present embodiment may optionally further include one or more types of vinyl halide copolymer layers having chemical or physical characteristics differing from the vinyl halide copolymer according to the present embodiment. For example, a film formed by coating a water dispersion of a vinyl halide copolymer having a different composition may be included with the aim of blocking prevention or film slipperiness improvement on the layer that is formed by coating the water dispersion of the vinyl halide copolymer according to the present embodiment.
Another example is a film obtained through alternate stacking of a layer of the vinyl halide copolymer according to the present embodiment and a layer of a vinyl halide copolymer obtained through copolymerization using a comonomer having high plasticity such as methyl acrylate or butyl acrylate. A film having such a structure is expected to have high impact resistance.
In the case of a film that includes layers of a plurality of types of vinyl halide copolymers in this manner, the vinyl halide copolymer layer thickness is taken to be the total of the thicknesses of all of these layers.
The coating film mass after drying for the layer formed by coating the water dispersion of the vinyl halide copolymer is not specifically limited but is preferably 1 $g/m^2$, more preferably 10 $g/m^2$ or more, and even more preferably 40 $g/m^2$ or more. By increasing the coating film mass after drying, it is possible to improve barrier properties of the overall film.
A method of performing recoating of the water dispersion a plurality of times is typically adopted in order to increase the coating film weight. As the number of times that recoating is performed increases, it becomes difficult to obtain a uniform coating film with a water dispersion for which film formation properties have deteriorated due to long-term storage because recoating of the water dispersion is performed repeatedly on a film in which cracks have formed. For this reason, the water dispersion of the vinyl halide copolymer according to the present embodiment, which has improved film formation life, is extremely useful in production of a film having a large final coating film mass.
It is preferable that the water dispersion of the vinyl halide copolymer according to the present embodiment is coated onto a film substrate, examples of which are given above, and is then used as blister packaging. The obtained blister packaging displays excellent barrier properties (for example, water vapor barrier properties).
Alternatively, the water dispersion of the vinyl halide copolymer according to the present embodiment may be coated onto paper and then be used as moisture-proof paper.
Moreover, besides use as blister packaging, the film according to the present embodiment can alternatively be used in that form as a coating agent for forming a clear film.
The method by which the water dispersion of the vinyl halide copolymer according to the present embodiment set forth above is coated onto the film substrate can be a commonly known method such as air spraying, airless spraying, roll coating, curtain flow coating, roll coating, dip coating, or spin coating performed with respect to a surface that is to be coated. After coating onto the film substrate, the resultant film is typically held at normal temperature or under heating for a specific time to perform drying.
Water vapor barrier properties and film formation properties after long-term storage can be evaluated for the water dispersion of the vinyl halide copolymer and the film including a layer formed by coating the water dispersion according to the present embodiment using the following parameters (1) and (2).

(1) Water vapor barrier properties

The water vapor barrier properties of the film including the layer formed by coating the water dispersion of the vinyl halide copolymer according to the present embodiment can be evaluated under conditions of 38°C and 100% RH using a water vapor transmission rate analyzer PERMATRAN 3/33 produced by MOCON, Inc. (units: $g/m^2 \cdot day$ at 38°C and 100% RH).
Note that an average value of measurement values from 48 hours to 60 hours after the start of measurement is taken to be the water vapor transmission rate.
Four measurements are performed, and the average value thereof is used.
Although no specific limitations are made, the film including the layer formed by coating the water dispersion of the vinyl halide copolymer according to the present embodiment can be used in applications that necessitate high barrier properties (for example, water vapor barrier properties), and thus the numerical range for this water vapor transmission rate is preferably 0.6 $g/m^2 \cdot day$ or less, more preferably 0.5 $g/m^2 \cdot day$ or less, and even more preferably 0.4 $g/m^2 \cdot day$ or less.

(2) Film formation properties after long-term storage (film formation life)

In a constant-temperature and constant-humidity chamber with a temperature of 23°C and a humidity of 55%, 45 mL of the water dispersion is collected in a 50 mL sample bottle, which is then covered with a lid and is left at rest for 5 hours. Next, inside of the constant-temperature and constant-humidity chamber, a heat gradient tester (BIG HEART) produced by Imoto Machinery Co., Ltd. is adjusted such as to have a temperature of 10°C at one end and a temperature of 30°C at the other end, and, once the heat gradient on this tester is confirmed to be 1°C per 4 cm, the water dispersion is coated onto the tester using a 0.2 mm applicator and is dried for 12 hours. The highest temperature at which a crack of at least 1 mm in diameter forms in the coating film is taken to be the minimum film formation temperature (MFT). The MFT is measured 10 times for one sample, and the average value thereof is used.
A produced water dispersion is stored at 23°C, and the MFT thereof is measured every month. The MFT of the $0^{th}$ month is taken to be T0, the MFT of an $n^{th}$ month is taken to be Tn, and the change ΔMFT of the MFT is calculated by Tn - T0. Loss of film formation properties is considered to have occurred at a point n at which ΔMFT ≥ 4°C is satisfied, and thus a point at which ΔMFT ≥ 4°C is first satisfied is taken to be the limit of film formation properties after long-term storage (i.e., the film formation life).
For example, in a case in which the MFT of the $0^{th}$ month is 12°C, the MFT of the $1^{st}$ month is 13°C, and the MFT of the $2^{nd}$ month is 16°C, the film formation life of the water dispersion is 2 months.
After this film formation life, a uniform coating film cannot be obtained, and the coating film cannot display adequate water vapor barrier properties.
A longer film formation life is more preferable because it is difficult to distribute and store a water dispersion having a short film formation life. In general, when distributing and storing a water dispersion, this film formation life is preferably 6 months or more, more preferably 7 months or more, even more preferably 8 months or more, and even more preferably 9 months or more.
The MFT (T0) of the water dispersion of the vinyl halide copolymer straight after synthesis ($0^{th}$ month) is preferably 25°C or lower, and more preferably 20°C or lower. A lower MFT indicates better film formation properties at low temperature. In order to avoid thermal decomposition of the vinyl halide copolymer, the water dispersion according to the present embodiment is preferably dried at a low temperature (preferably 80°C or lower) to the extent that a coating film having good barrier properties is obtained. A lower MFT makes it possible to set a lower drying temperature.
Moreover, the MFT (T0) of the water dispersion of the vinyl halide copolymer straight after synthesis ($0^{th}$ month) is preferably 10°C or higher, and more preferably 15°C or higher. When the MFT (T0) is within any of these ranges, an increase of the MFT during storage tends to be suppressed.

EXAMPLES

The following provides a more specific description of the present disclosure through examples.
Note that in the examples and comparative examples, "parts" and "%" respectively indicate "parts by mass" and "mass%".

<Examples of polymerization of water dispersions>

[Example 1]

(Step A)

A glass-lined pressure-resistant reactor was charged with 300 parts of pure water, 0.46 parts of sodium hydrogen sulfite, and 2.2 parts in terms of dry mass of sodium dodecylbenzenesulfonate solution having a solid content of 18% as an emulsifier relative to 100 parts of total mass of raw material monomer. The contents were stirred while performing degassing, and then the pressure was increased to atmospheric pressure with nitrogen, and the temperature of the contents was maintained at 45°C. Methyl methacrylate was prepared in a separate vessel as a raw material monomer. The pressure-resistant reactor was then charged with 10 parts by mass of the raw material monomer all at once, and 0.5 hours of polymerization was performed.

Metered addition of a solution obtained by dissolving 0.21 parts of sodium persulfate as an initiator and 2.8 parts in terms of dry mass of sodium dodecylbenzenesulfonate solution having a solid content of 18% as an emulsifier in 27 parts of pure water was performed continuously over 3.5 hours starting from the point at which 10 parts of the raw material monomer was added all at once.

Concurrently thereto, the remaining 90 parts of the raw material monomer was continuously added starting from 0.5 hours after the addition of 10 parts by mass of the raw material monomer all at once such that the total amount was added over 3 hours.

Once the addition of 90 parts of the raw material monomer was complete, metered addition of a solution obtained by dissolving 0.18 parts of sodium persulfate as an initiator in 25.5 parts of pure water was performed continuously over 3 hours.

Once the continuous addition of the initiator solution was complete, the temperature was lowered to 20°C, and polymerization was ended.

The polymerization yield was 99%. A water dispersion that was obtained in this manner was taken to be a seed latex (I).

(Step B)

A glass-lined pressure-resistant reactor was charged with 57 parts of pure water, 0.03 parts of sodium D-araboascorbate, and 0.2 parts of sodium alkylsulfonate relative to 100 parts of total mass of raw material monomer, and then 3.5 parts in terms of dry mass of the seed latex (I) was added. The contents were stirred while performing degassing, and then the pressure was increased to atmospheric pressure with nitrogen, and the temperature of the contents was maintained at 45°C. A raw material monomer mixture having a mass composition ratio of VDC/MAN = 91/9 was prepared in a separate vessel. Next, continuous metered injection of 100 parts of the monomer mixture was performed.

Concurrently thereto, continuous metered injection of an initiator obtained by dissolving 0.04 parts of t-butyl hydroperoxide in 3.5 parts of pure water, a reductant obtained by dissolving 0.015 parts of sodium D-araboascorbate in 3.5 parts of pure water, and an emulsifier obtained by dissolving 1.6 parts of sodium alkyl diphenyl ether disulfonate in 2.5 parts of pure water was performed. The contents were held at 45°C under stirring during this injection, and the reaction was allowed to progress until the internal pressure dropped sufficiently.

The polymerization yield was 99.9%. Since the polymerization yield was almost 100%, the copolymer composition was substantially equal to the raw material charging ratio. A water dispersion that was obtained in this manner was subjected to steam stripping to remove unreacted monomer, was subsequently adjusted to a pH of 2.5 using saturated tetrasodium pyrophosphate solution, and then the solid content was adjusted to 60%.

In this polymerization, 100 parts of the monomer mixture was continuously injected, and the time taken until the total amount thereof was added was 40 hours.

[Comparative Example 1]

A water dispersion of a vinylidene chloride copolymer was produced in the same way as in Example 1 of PTL 4.

A glass-lined pressure-resistant reactor was charged with 57 parts of pure water, 0.03 parts of sodium D-araboascorbate, and 0.2 parts of sodium alkylsulfonate. The contents were stirred while performing degassing, and then the temperature of the contents was maintained at 45°C. A raw material monomer mixture having a mass composition ratio of VDC/MMA/AN = 90.1/9.4/0.5 was prepared in a separate vessel. The pressure-resistant reactor was charged with 20 parts of the raw material monomer mixture all at once, and polymerization was performed until the internal pressure dropped. Next, continuous metered injection of the remaining 80 parts of the monomer mixture was performed.

Concurrently thereto, continuous metered injection of an initiator obtained by dissolving 0.014 parts of t-butyl

hydroperoxide in 3.5 parts of pure water, a reductant obtained by dissolving 0.015 parts of sodium D-araboascorbate in 3.5 parts of pure water, and an emulsifier obtained by dissolving 1.6 parts of sodium alkyl diphenyl ether disulfonate in 2.5 parts of pure water was performed. The contents were held at 45°C under stirring during this injection, and the reaction was allowed to progress until the internal pressure dropped sufficiently.

The polymerization yield was 99.9%. Since the polymerization yield was almost 100%, the composition of the copolymer was substantially equal to the raw material charging ratio. A water dispersion that was obtained in this manner was subjected to steam stripping to remove unreacted monomer, and then the solid content was adjusted to 50% to 60%.

In this polymerization, 80 parts of the monomer mixture was continuously injected, and the time taken until the total amount thereof was added was 21 hours.

[Comparative Example 2]

Polymerization was performed in the same manner with the exception that the mass composition ratio of the raw material monomer mixture in Comparative Example 1 was set as VDC/MAN = 91/9.

[Comparative Example 3]

Polymerization was performed in the same way as in Examples 1 and 2 described in PTL 7.

(Step A)

A polymerization autoclave (stirred at 20 rpm) having a capacity of 8.7 $m^3$ and including a cooling circuit was continuously charged with 3,699 L of demineralized water, 14.07 kg (6.7 g of active material per 1 kg of monomer) of powdered ammonium persulfate solution, and 1,023 L (100 g of active material per 1 kg of monomer) of sodium dodecylbenzenesulfonate solution (containing 20% active material (DISPONIL LDBS 20 provided by Cognis)). The autoclave was closed, and then two vacuum operations were performed with an absolute pressure of 140 mbar.

Next, the mixture was adjusted to 85°C while increasing the stirring speed to 60 rpm. Once the temperature reached 84°C, 2,100 kg of methyl methacrylate was added at a constant rate over 3 hours while also adding 151 L (2.87 g of active material per 1 kg of monomer) of 40 g/L ammonium persulfate solution at a constant rate over the same period of 3 hours.

Once injection of methyl methacrylate and ammonium persulfate was complete, polymerization was continued until the temperature difference between the temperature of the reaction medium and the temperature of the cooling circuit was less than 5°C, and then 1 hour of post-polymerization was performed. Next, the stirring speed was lowered to 20 rpm, latex degassing was performed, and then stripping was performed under vacuum at 65 °C for 3 hours.

A PMMA seed latex that was polymerized in this manner had a solid content of 32.5%. The average diameter of particles determined by fluid mechanical fractionation such as described above was 34 nm. The particle diameter distribution was unimodal with a standard deviation of 6 nm.

The obtained PMMA seed latex was taken to be a seed latex (II).

(Step B)

Polymerization of VDC in aqueous emulsion in presence of seed latex (II)

A polymerization autoclave having a capacity of 40 L and including a cooling circuit was continuously charged with 10.9 L of demineralized water and 240 mL of 0.1 g/L iron nitrate solution. The medium stirring speed was set as 160 rpm. Next, 492 g (8 g of dry material per 1 kg of monomer) of the seed latex (II) was added into the autoclave. The autoclave was then closed, and two vacuum operations were performed with an absolute pressure of 100 mbar. Next, 212 mL of 50 g/L secondary alkyl sulfonate salt solution (Mersolat H40 provided by Bayer), 18.17 kg of vinylidene chloride, 1.83 kg of methyl acrylate, and 62 g of acrylic acid were continuously fed into the autoclave by suction.

After performing 5 minutes of stirring, the temperature of the reaction medium was raised to 55°C. At T = 52°C, 500 mL of 14 g/L sodium pyrosulfite solution was added. At T = 54°C + 20 minutes, 210 mL of 2 g/L ammonium persulfate solution was added, and the stirring speed was lowered to 120 rpm. The time at which feeding of ammonium persulfate was completed was taken to be the start of polymerization (To).

At To + 30 minutes, 781.2 mL of 425 g/L Mersolat H40 was added at a constant rate over 5 hours while also adding 2 g/L ammonium persulfate solution at a rate of 50 mL/hr. Injection of ammonium persulfate was continued until the temperature difference between the temperature of the reaction medium and the temperature of the cooling circuit reached 2°C. At this point, 150 mL of 33.3 g/L ammonium persulfate solution was added all at once, and the latex was subjected to 60 minutes of post-polymerization. The polymerization time was 12 hours.

Next, the latex was subjected to high-temperature degassing and was subsequently subjected to stripping under vacuum at 70°C. During stripping, the stirring speed was lowered to 110 rpm. The latex was cooled to 20°C after stripping and was then filtered using a 55 μm filtration pocket. In addition, the following characteristics of the latex were adjusted. The surface tension was adjusted to 30 mN/m to 33 mN/m using 425 g/L Mersolat H40 solution, the pH was adjusted to 2.5 to 3.5 using 150 g/L trisodium phosphate solution, post-modification was performed using 38.5 mL/kg of dry material of Gleitmittel 8645 wax (provided by BASF Corporation) containing 20% of active material and 16.7 mL/kg of dry material of 150 g/L $Na_2OS$ Promex solution (provided by YDS), and finally the solid content was adjusted to 57% to 58%.

[Comparative Example 4]

Polymerization was performed in the same way as in Example 4 of PTL 6.

(Step A)

The following materials were heated at 32°C to prepare a polymethyl methacrylate seed latex.
Materials: 380 parts of water, 200 parts of methyl methacrylate, 2.0 parts of ammonium persulfate, 2.0 parts of sodium metabisulfite, 0.006 parts of ammonium iron sulfate
After the reaction, a solution obtained by dissolving 12 parts of sodium lauryl sulfate in 48 parts of water was added for stabilization.
The resultant water dispersion had a solid content of 33.4% and an average particle diameter of 100 nm to 120 nm.

(Step B)

The following materials were heated at 32°C to perform polymerization of a vinylidene chloride copolymer.
Materials: 372 parts of water, 42 parts of water dispersion polymerized in step A, 0.79 parts of sodium lauryl sulfate, 353 parts of vinylidene chloride, 21 parts of methyl acrylate, 12 parts of butyl acrylate, 2.4 parts of ammonium persulfate, 2.4 parts of sodium metabisulfite, 0.012 parts of ammonium iron sulfate
Once polymerization ended, a solution of 4 parts of sodium lauryl sulfate dissolved in 30 parts of water was added.

[Comparative Example 5]

Polymerization was performed in the same way as in Example 5 of PTL 6.

(Step A)

The following materials were heated at 32°C to prepare a polymethyl methacrylate-butyl acrylate copolymer seed latex.
Materials: 400 parts of water, 2 parts of sodium lauryl sulfate, 120 parts of methyl methacrylate, 80 parts of butyl acrylate, 3.0 parts of ammonium persulfate, 3.0 parts of sodium metabisulfite, and 0.006 parts of ammonium iron sulfate
After the reaction, 6 parts of sodium lauryl sulfate was added for stabilization.
The resultant water dispersion had a solid content of 31.9% and an average particle diameter of 100 nm to 120 nm.

(Step B)

The following materials were heated at 32°C to perform polymerization of a vinylidene chloride copolymer.
Materials: 380 parts of water, 42 parts of water dispersion polymerized in step A, 1.31 parts of sodium lauryl sulfate, 351.2 parts of vinylidene chloride, 23.2 parts of methyl acrylate, 11.6 parts of decyl octyl acrylate, 3.9 parts of itaconic acid, 2.4 parts of ammonium persulfate, 0.012 parts of ammonium iron sulfate
Once the polymerization had ended, the concentration of sodium lauryl sulfate was adjusted to 1.32% relative to the total amount of monomer and seed.
The reactivity ratios r1 of itaconic acid and decyl octyl acrylate are not listed in Polymer Handbook Forth Edition (ISBN:0-471-48171-8), but even supposing that the reactivity ratios r1 with vinylidene chloride of itaconic acid and decyl octyl acrylate are both less than 0.7, the proportion constituted by monomers having a reactivity ratio r1 with vinylidene chloride of less than 0.7 in step B of this example would, at most, be 3.98 parts.

[Example 2]

A water dispersion was produced in the same way as in Example 1 with the exception that the mass composition ratio of the raw material monomer mixture used in step B was set as VDC/MA/MAN = 91/5/4.

[Example 3]

A water dispersion was produced in the same way as in Example 1 with the exception that the mass composition ratio of the raw material monomer mixture used in step B was set as VDC/MA/MAN = 91/3/6.

[Example 4]

A water dispersion was produced in the same way as in Example 1 with the exception that the mass composition ratio of the raw material monomer mixture used in step B was set as VDC/AN = 91/9.

[Example 5]

A water dispersion was produced in the same way as in Example 1 with the exception that the mass composition ratio of the raw material monomer mixture used in step B was set as VDC/MMA = 91/9.

[Example 6]

A water dispersion was produced in the same way as in Example 1 with the exception that the mass composition ratio of the raw material monomer mixture used in step B was set as VDC/MAN/MMA/AA = 91.5/5.2/2.4/0.9.

[Example 7]

A water dispersion was produced in the same way as in Example 1 with the exception that the seed latex (I) used in step B was added such as to be 2.5 parts in terms of dry mass.

[Example 8]

A water dispersion was produced in the same way as in Example 1 with the exception that the seed latex (I) used in step B was added such as to be 1.0 parts in terms of dry mass.

[Example 9]

A water dispersion was produced in the same way as in Example 1 with the exception that the seed latex (I) used in step B was added such as to be 4.5 parts in terms of dry mass.

[Example 10]

A water dispersion was produced in the same way as in Example 1 with the exception that the mass composition ratio of the raw material monomer used in step A was set as MMA/St = 50/50.

[Example 11]

A water dispersion was produced in the same way as in Example 1 with the exception that the mass composition ratio of the raw material monomer used in step A was set as MMA/St = 75/25.

[Example 12]

A water dispersion was produced in the same way as in Example 1 with the exception that the mass composition ratio of the raw material monomer used in step A was set as MMA/BA = 80/20.

[Example 13]

A water dispersion was produced in the same way as in Example 1 with the exception that the mass composition

ratio of the raw material monomer used in step A was set as MMA/BA = 60/40.

[Example 14]

A water dispersion was produced in the same way as in Example 1 with the exception that the mass composition ratio of the raw material monomer used in step A was set as MMA/BA = 40/60.

[Example 15]

A water dispersion was produced in the same way as in Example 1 with the exception that the mass composition ratio of the raw material monomer used in step A was set as MMA/BA = 20/80.

[Example 16]

(Step A)

A glass-lined pressure-resistant reactor was charged with 300 parts of pure water, 0.1 parts of sodium hydrogen sulfite, and 2.2 parts in terms of dry mass of sodium dodecylbenzenesulfonate solution having a solid content of 18% as an emulsifier relative to 100 parts of total mass of monomer. The contents were stirred while performing degassing, and then the pressure was increased to atmospheric pressure with nitrogen, and the temperature of the contents was maintained at 45°C. Methyl methacrylate was prepared in a separate vessel as a raw material monomer. The pressure-resistant reactor was then charged with 10 parts by mass of the raw material monomer all at once, and 1 hour of polymerization was performed.

Thereafter, metered addition of a solution obtained by dissolving 0.08 parts of sodium persulfate as an initiator and 7.8 parts in terms of dry mass of sodium dodecylbenzenesulfonate solution having a solid content of 18% as an emulsifier in 62.82 parts of pure water was performed continuously over 6 hours starting from the point at which 10 parts of the raw material monomer was added all at once.

Concurrently thereto, the remaining 90 parts of the raw material monomer was continuously added starting from 0.5 hours after 10 parts of the raw material monomer was added all at once such that continuous addition of the total amount of the raw material monomer was completed in 2.5 hours.

Once the continuous addition of the initiator and emulsifier solution was complete, the temperature was lowered to 20°C, and polymerization was ended.

The polymerization yield was 95%. A water dispersion that was obtained in this manner was taken to be a seed latex (III).

Once the polymerization had ended, transition to polymerization of step B was performed in that state without removing the water dispersion from the reactor.

Before transition to polymerization of step B, a minimal amount of the water dispersion necessary for glass-transition point measurement was withdrawn and was used as a sample for glass-transition point measurement. Since the withdrawn amount was small relative to the total amount of the water dispersion, the effect thereof can be ignored.

(Step B)

The reactor was charged with 0.03 parts of sodium D-araboascorbate and 0.2 parts of sodium alkylsulfonate relative to 3.5 parts of dry mass inside of the reactor, and pure water was added such that the amount of water was 57 parts so as to adjust the concentration. The contents were stirred while performing degassing, and then the pressure was increased to atmospheric pressure with nitrogen, and the temperature of the contents was maintained at 45°C. A raw material monomer mixture having a mass composition ratio of VDC/MAN = 91/9 was prepared in a separate vessel. Next, continuous metered injection of 100 parts of the monomer mixture was performed.

Concurrently thereto, continuous metered injection of an initiator obtained by dissolving 0.04 parts of t-butyl hydroperoxide in 3.5 parts of pure water, a reductant obtained by dissolving 0.015 parts of sodium D-araboascorbate in 3.5 parts of pure water, and an emulsifier obtained by dissolving 1.6 parts of sodium alkyl diphenyl ether disulfonate in 2.5 parts of pure water was performed. The contents were held at 45°C under stirring during this injection, and the reaction was allowed to progress until the internal pressure dropped sufficiently.

The polymerization yield was 99.9%. Since the polymerization yield was almost 100%, the composition of the copolymer was substantially equal to the raw material charging ratio. A water dispersion obtained in this manner was subjected to steam stripping to remove unreacted monomer, was subsequently adjusted to a pH of 2.5 using saturated tetrasodium pyrophosphate solution, and then the solid content was adjusted to 60%.

In this polymerization, 100 parts of the monomer mixture was continuously injected, and the time taken until

the total amount thereof was added was 40 hours.

[Example 17]

(Step B)

First, a water dispersion of a vinylidene chloride copolymer was produced in the same way as in Comparative Example 2, and the solid content thereof was adjusted to 58%. A water dispersion that was obtained in this manner was taken to be a seed latex (IV).

(Step A)

Next, a glass-lined pressure-resistant reactor was charged with the seed latex (IV). The amount of solid content of the charged seed latex (IV) was set as 100 parts.

The pressure-resistant reactor was charged with 0.1 parts of sodium hydrogen sulfite, the contents were stirred while performing degassing, and then the pressure was increased to atmospheric pressure with nitrogen, and the temperature of the contents was maintained at 45 °C. A separate vessel was used to prepared 3.5 parts of methyl methacrylate as a raw material monomer. Metered addition of the raw material monomer was performed continuously over 3 hours.

Concurrently thereto, metered addition of a solution obtained by dissolving 0.08 parts of sodium persulfate as an initiator in 3 parts of pure water was performed continuously over 6 hours starting from the point at which continuous addition of the raw material monomer was started.

Once the continuous addition of the initiator solution was complete, the temperature was lowered to 20°C, and polymerization was ended.

A water dispersion obtained in this manner was subjected to steam stripping to remove unreacted monomer, was subsequently adjusted to a pH of 2.5 using saturated tetrasodium pyrophosphate solution, and then the solid content was adjusted to 60%.

[Example 18]

A water dispersion was produced in the same way as in Example 1 with the exception that in adjustment of the water dispersion, 0.1 parts of hydrogen peroxide and 2 parts in terms of dry mass of a water dispersion of a highly crystalline vinylidene chloride copolymer that was polymerized in the same way as in Comparative Example 1 with a raw material monomer composition of VDC = 100 as a crystal nucleating agent were added, and adjustment to a pH of 2.5 was subsequently performed using saturated tetrasodium pyrophosphate aqueous solution.

Note that the vinylidene chloride copolymer added as a crystal nucleating agent only had a melting peak of 170°C or higher and that S1/(S1 + S2) for this copolymer was 1.0.

The maximum melting peak for the added vinylidene chloride copolymer was 179°C.

[Example 19]

A water dispersion was produced in the same way as in Example 1 with the exception that in step B, the seed latex (I) was added such as to be 1.0 parts in terms of dry mass and the raw material monomer composition was set as VDC/MAN = 90/10, and that in adjustment of the water dispersion, 0.01 parts of hydrogen peroxide and 1 part in terms of dry mass of a water dispersion of a highly crystalline vinylidene chloride copolymer that was polymerized in the same way as in Comparative Example 1 with VDC/AN = 97/3 as a crystal nucleating agent were added, and adjustment to a pH of 2.5 was subsequently performed using saturated tetrasodium pyrophosphate aqueous solution.

Note that the vinylidene chloride copolymer added as a crystal nucleating agent only had a melting peak of 170°C or higher and that S1/(S1 + S2) for this copolymer was 1.0.

The maximum melting peak for the added vinylidene chloride copolymer was 177°C.

[Example 20]

A water dispersion was produced in the same way as in Example 1 with the exception that in step B, the seed latex (I) was added such as to be 1.0 parts in terms of dry mass and the raw material monomer composition was set as VDC/MAN = 90/10, and that in adjustment of the water dispersion, 0.05 parts of hydrogen peroxide and 5 parts in terms of dry mass of a water dispersion of a highly crystalline vinylidene chloride copolymer that was polymerized in the same way as in Comparative Example 1 with VDC/AN = 95/5 as a crystal nucleating agent were added, and adjustment to a

pH of 2.5 was subsequently performed using saturated tetrasodium pyrophosphate aqueous solution.

Note that the vinylidene chloride copolymer added as a crystal nucleating agent only had a melting peak of 170°C or higher and that S1/(S1 + S2) for this copolymer was 1.0.

The maximum melting peak for the added vinylidene chloride copolymer was 175°C.

[Example 21]

A water dispersion was produced in the same way as in Example 1 with the exception that in step B, the seed latex (I) was added such as to be 1.0 parts in terms of dry mass and the raw material monomer composition was set as VDC/MAN = 89/11, and that in adjustment of the water dispersion, 0.5 parts of hydrogen peroxide and 2.0 parts of a polyethylene wax emulsion Poligen WE7 produced by BASF Corporation as a crystal nucleating agent were added, and adjustment to a pH of 2.5 was subsequently performed using saturated tetrasodium pyrophosphate aqueous solution.

[Example 22]

A water dispersion was produced in the same way as in Example 1 with the exception that in step B, the seed latex (I) was added such as to be 1.0 parts in terms of dry mass and the raw material monomer composition was set as VDC/MAN = 90/10, and that in adjustment of the water dispersion, 1.0 parts of hydrogen peroxide and 1.0 parts of a carnauba wax emulsion ML160RPH produced by Michelman, Inc. as a crystal nucleating agent were added, and adjustment to a pH of 2.5 was subsequently performed using saturated tetrasodium pyrophosphate aqueous solution.

[Example 23]

A water dispersion was produced in the same way as in Example 1 with the exception that the mass composition ratio of the raw material monomer used in step A was set as VDC/MMA = 60/40.

[Example 24]

A water dispersion was produced in the same way as in Example 1 with the exception that the mass composition ratio of the raw material monomer used in step A was set as VDC/MMA = 70/30.

[Comparative Example 6]

A water dispersion was produced in the same way as in Example 1 with the exception that the mass composition ratio of the raw material monomer used in step A was set as MMA/BA = 20/80 and the mass composition ratio of the raw material monomer mixture used in step B was set as VDC/BA = 60/40.

[Example 25]

A water dispersion was produced in the same way as in Example 1 with the exception that the mass composition ratio of the raw material monomer used in step A was set as MMA/BA = 20/80, the mass composition ratio of the raw material monomer mixture used in step B was set as VDC/MAN = 85/15, and 3.0 parts by mass in terms of dry mass of the water dispersion of the vinylidene chloride copolymer used in Example 18 was added as a crystal nucleating agent.

[Example 26]

In this example, polymerization of step A was performed twice, and polymerization of step B was performed once.

(Step A-1)

First, a seed latex (I) was synthesized in the same way as in Example 1.

(Step B)

A glass-lined pressure-resistant reactor was charged with 57 parts of pure water, 0.03 parts of sodium D-araboascorbate, and 0.2 parts of sodium alkylsulfonate relative to 100 parts of total mass of raw material monomer, and then 3.5 parts in terms of dry mass of the seed latex (I) was added. The contents were stirred while performing degassing, and then the pressure was increased to atmospheric pressure with nitrogen, and the temperature of the contents was

maintained at 45°C. A raw material monomer mixture having a mass composition ratio of VDC/MAN = 91/9 was prepared in a separate vessel. Next, continuous metered injection of 100 parts of the monomer mixture was performed.

Concurrently thereto, continuous metered injection of an initiator obtained by dissolving 0.04 parts of t-butyl hydroperoxide in 3.5 parts of pure water, a reductant obtained by dissolving 0.015 parts of sodium D-araboascorbate in 3.5 parts of pure water, and an emulsifier obtained by dissolving 1.6 parts of sodium alkyl diphenyl ether disulfonate in 2.5 parts of pure water was performed. The contents were held at 45°C under stirring during this injection, and the reaction was allowed to progress until the internal pressure dropped sufficiently.

The resultant water dispersion was adjusted to a solid content of 50% using pure water to obtain a seed latex (V).

Note that this step B is denoted as step B-1 in Table 3.

(Step A-2)

Next, a glass-lined pressure-resistant reactor was charged with the seed latex (V). The amount of solid content in the charged seed latex (V) was set as 100 parts.

The pressure-resistant reactor was charged with 0.1 parts of sodium hydrogen sulfite, the contents were stirred while performing degassing, and then the pressure was increased to atmospheric pressure with nitrogen, and the temperature of the contents was maintained at 45 °C. A separate vessel was used to prepared 0.1 parts of methyl methacrylate as a raw material monomer. Metered addition of the raw material monomer was performed continuously over 3 hours.

Concurrently thereto, metered addition of a solution obtained by dissolving 0.3 parts of sodium persulfate as an initiator in 3 parts of pure water was performed continuously over 6 hours starting from the point at which continuous addition of the raw material monomer was started.

Once the continuous addition of the initiator solution was complete, the temperature was lowered to 20°C, and polymerization was ended.

A water dispersion obtained in this manner was subjected to steam stripping to remove unreacted monomer, was subsequently adjusted to a pH of 2.5 using saturated tetrasodium pyrophosphate solution, and then the solid content was adjusted to 60%.

[Example 27]

In this example, polymerization of step A was performed once, and polymerization of step B was performed twice.

(Step A)

First, a seed latex (I) was synthesized in the same way as in Example 1.

Note that this step A is denoted as step A-1 in Table 3.

(Steps B-1 and B-2)

A glass-lined pressure-resistant reactor was charged with 57 parts of pure water, 0.03 parts of sodium D-araboascorbate, and 0.2 parts of sodium alkylsulfonate relative to 100 parts of total mass of raw material monomer, and then 3.5 parts in terms of dry mass of the seed latex (I) was added. The contents were stirred while performing degassing, and then the pressure was increased to atmospheric pressure with nitrogen, and the temperature of the contents was maintained at 45°C. A raw material monomer mixture 1 having a mass composition ratio of VDC/MAN = 91/9 and a raw material monomer mixture 2 having a mass composition ratio of VDC/MAN = 90/10 were prepared in separate vessels. Next, metered injection of 50 parts of the raw material monomer mixture 1 was performed continuously over 20 hours (step B-1). Once addition of the raw material monomer mixture 1 was complete, metered injection of 50 parts of the raw material monomer mixture 2 was performed continuously over 20 hours (step B-2).

Concurrently thereto, continuous metered injection of an initiator obtained by dissolving 0.04 parts of t-butyl hydroperoxide in 3.5 parts of pure water, a reductant obtained by dissolving 0.015 parts of sodium D-araboascorbate in 3.5 parts of pure water, and an emulsifier obtained by dissolving 1.6 parts of sodium alkyl diphenyl ether disulfonate in 2.5 parts of pure water was performed. The contents were held at 45°C under stirring during this injection, and the reaction was allowed to progress until the internal pressure dropped sufficiently.

The polymerization yield was 99.9%. Since the polymerization yield was almost 100%, the composition of the copolymer was substantially equal to the raw material charging ratio. A water dispersion obtained in this manner was subjected to steam stripping to remove unreacted monomer, was subsequently adjusted to a pH of 2.5 using saturated tetrasodium pyrophosphate solution, and then the solid content was adjusted to 60%.

[Comparative Example 7]

A water dispersion was produced in the same way as in Example 1 with the exception that the mass composition ratio of the raw material monomer used in step A was set as styrene/MMA = 60/40.
Note that with the mass composition ratio of this raw material monomer, the raw material monomer has an n-octanol/water partition coefficient (logPow) with an average value of 2.35 (i.e., not 2.2 or less). Therefore, this step corresponds to step C since it does not satisfy the requirements of steps A and B.

[Comparative Example 8]

A water dispersion was produced in the same way as in Example 1 with the exception that the mass composition ratio of the raw material monomer used in step A was set as styrene = 100.
Note that with the mass composition ratio of this raw material monomer, the raw material monomer has an n-octanol/water partition coefficient (logPow) with an average value of 3.0 (i.e., not 2.2 or less). Therefore, this step corresponds to step C since it does not satisfy the requirements of steps A and B.
The obtained water dispersions of vinylidene chloride copolymers were used to perform the following measurements. The results are shown in Table 3.

<Measurement of water vapor transmission rate (moisture permeability)>

(Production of coated film)

Emulder 381 A produced by BASF Corporation as a primer was coated onto a stretched polyvinyl chloride film (thickness 250 μm) that had undergone corona discharge treatment such as to have a coating film mass after drying of 2 g/$m^2$ using a Mayer rod and was then subjected to 15 seconds of drying treatment at 85°C in a hot-air circulation dryer. A water dispersion of a vinylidene chloride copolymer obtained in each example or comparative example was coated onto this film using a Mayer rod such as to have a coating film mass after drying per one coating of 10 g/$m^2$, was subjected to 15 seconds of drying treatment at 85°C in a hot-air circulation dryer, and was recoated until the coating film mass after drying reached 40 g/$m^2$. The obtained coated film was placed in a 40°C oven, was stored therein for 24 hours, and was then subjected to 2 hours of moisture adjustment in a constant-temperature and constant-humidity chamber of 20°C and 55% humidity.

(Measurement of water vapor transmission rate (moisture permeability))

The obtained coated film was measured under conditions of 38°C and 100% RH using a water vapor transmission rate analyzer PERMATRAN 3/33 produced by MOCON, Inc. (units: g/$m^2$·day at 38°C and 100% RH).
Note that an average value of measurement values from 48 hours to 60 hours after the start of measurement was taken to be the water vapor transmission rate.
Four measurements were performed, and the average value thereof was used.

<Measurement of glass-transition point of polymer synthesized in step A>

Glass-transition point measurement was performed by the following method.
The following two methods were used for sample preparation, but method (i) was used with the exception of in Example 17.
This treatment is referred to as methanol precipitation, and the resultant insoluble content is referred to as a methanol precipitate.

(i) In a case in which a water dispersion synthesized in step A could be isolated, the water dispersion was isolated and was then subjected to measurement by a method described below. Note that an isolated state means not containing a polymer that is produced in another step, though an additive such as an emulsifier that is added in step A may be included.
At least 10 mL of the water dispersion was freeze dried, and then 0.5 g of the freeze dried product was collected. The collected freeze dried product was treated by methanol precipitation described below to obtain a methanol precipitate. The obtained precipitate was subjected to glass-transition point measurement described below.
(ii) In a case in which the water dispersion synthesized in step A could not be isolated, measurement was performed by a method described below.

A water dispersion was obtained by performing emulsion polymerization under the same conditions as in step A with respect to a monomer mixture obtained by mixing the monomers used in step A in the mass fractions in step A.
At least 10 mL of the obtained water dispersion was freeze dried, and then 0.5 g of the freeze dried product was collected. The collected freeze dried product was treated by methanol precipitation described below to obtain a methanol precipitate. The obtained precipitate was subjected to glass-transition point measurement described below.

(Methanol precipitation)

Dropwise addition of 40 mL of methanol was performed with respect to a solution obtained by dissolving a sample in 10 mL of tetrahydrofuran having a purity of 99.9 mass% or higher. A produced precipitate was filtered off, and insoluble content (methanol precipitate) remaining after filtration was collected. Note that in a situation in which dissolution in tetrahydrofuran was difficult, heating and stirring were performed to the extent that the tetrahydrofuran did not boil.

(Measurement of glass-transition point)

The sample was heated to 170°C at 10°C/min and cooled to -40°C at 10°C/min in a nitrogen atmosphere using a differential scanning calorimeter Q-2000 produced by TA Instruments.
Next, the sample was heated to 190°C at 10°C/min, and measurement data up to 190°C was acquired.
This measurement was performed using an aluminum Tzero Pan and Tzero Hermetic Lid (produced by TA Instruments) as a sample pan and using an empty pan of the same type as a reference.
Next, a midpoint glass-transition point was determined using "Glass/Step Transition" in an analysis tool TA Universal Analysis of the Q-2000.

<Measurement of maximum peak temperature for melting of vinylidene chloride copolymer used as crystal nucleating agent>

A water dispersion of a vinylidene chloride copolymer was coated onto an aluminum plate using a Mayer bar such as to have a dry coating weight of 10 $g/m^2$ and was dried for 1 minute in an oven held at 100°C. The dried product was collected within 5 minutes using tweezers so as to collect a dried product of the vinylidene chloride copolymer. A 5 mg sample was collected from this dried product.
The sample collected by the method described above was heated to 170°C at 10°C/min and cooled to -40°C at 10°C/min in a nitrogen atmosphere using a differential scanning calorimeter Q-2000 produced by TA Instruments.
Next, the sample was heated to 190°C at 10°C/min, and measurement data up to 190°C was acquired. Of the acquired measurement data up to 190°C, data for 180°C or higher was not used because decomposition of vinylidene chloride begins at 180°C or higher, and measurement values from -40°C to 180°C in second heating were used to determine the maximum melting peak temperature.
This measurement was performed using an aluminum Tzero Pan and Tzero Hermetic Lid (produced by TA Instruments) as a sample pan and using an empty pan of the same type as a reference.
Next, a baseline was drawn by a previously described method, the area of a melting peak at lower than 170°C was calculated using Integrate Peak Linear in an analysis tool TA Universal Analysis of the Q-2000, and this area was taken to be S2. S2 was set as 0 in a situation in which there was not a melting peak at lower than 170°C.
Also, a baseline was drawn, the area of a melting peak at 170°C or higher was calculated using Integrate Peak Linear in an analysis tool TA Universal Analysis of the Q-2000, and this area was taken to be S1. S1 was set as 0 in a situation in which there was not a melting peak at 170°C or higher.
The determined values of S1 and S2 were rounded to one decimal place.

<Test of film formation properties after long-term storage>

In a constant-temperature and constant-humidity chamber with a temperature of 23°C and a humidity of 55%, 45 mL of a water dispersion was collected in a 50 mL sample bottle, which was then covered with a lid and left at rest for 5 hours. Next, inside of the constant-temperature and constant-humidity chamber, a heat gradient tester (BIG HEART) produced by Imoto Machinery Co., Ltd. was adjusted such as to have a temperature of 10°C at one end and a temperature of 30°C at the other end, and, once the heat gradient on this tester was confirmed to be 1°C per 4 cm, the water dispersion was coated onto the tester using a 0.2 mm applicator and was dried for 12 hours. The highest temperature at which a crack of at least 1 mm in diameter formed in the coating film was taken to be the minimum film formation temperature (MFT). The MFT was measured 10 times for one sample, and the average value thereof was used.
A water dispersion obtained in each example or comparative example was stored at 23°C, and the MFT thereof was measured every month. The MFT of the $0^{th}$ month was taken to be T0, the MFT of an $n^{th}$ month was taken to be

Tn, and the change ΔMFT of the MFT was calculated by Tn - T0. Loss of film formation properties is considered to have occurred at a point n at which ΔMFT ≥ 4°C is satisfied, and thus a point at which ΔMFT ≥ 4°C was first satisfied was taken to be the limit of film formation properties after long-term storage (i.e., the film formation life).

For example, in a case in which the MFT of the $0^{th}$ month was 12°C, the MFT of the $1^{st}$ month was 13°C, and the MFT of the $2^{nd}$ month was 16°C, the film formation life of the water dispersion was 2 months.

<Monomer composition>

The monomer composition of a vinyl halide copolymer of each example or comparative example was evaluated by collecting a sample by the following method, dissolving the sample in tetrahydrofuran-d8, and measuring the sample by NMR.

10 mL of a water dispersion was freeze dried, and 0.5 g of the freeze dried product was collected. Dropwise addition of 40 mL of acetone was performed with respect to a solution obtained by dissolving the collected freeze dried product in 10 mL of tetrahydrofuran having a purity of 99.9 mass% or higher. A produced precipitate was filtered off, and insoluble content remaining after filtration was collected. The collected insoluble content was taken to be a measurement sample. Through precipitation using acetone, composition analysis can be performed in a state in which a polymer synthesized in step A, which is soluble in acetone, has been removed.

The NMR measurement conditions were as follows.

Device: JEOL RESONANCE ECS400, (1H) Bruker Biospin Avance 600 (13C)
Observed nucleus: 1H (399.78 MHz), 13C (150.91 MHz)
Pulse program: Single pulse (1H), zgig30 (13C)
Cumulative number: 256 times (1H), 10,000 times (13C)
Lock solvent: THF-d8
Chemical shift standard: THF (1H: 180 ppm, 13C: 67.38 ppm)

The obtained NMR spectrum was used to perform integration of peaks and thereby identify the composition in the copolymer. The types of monomers that were included was obvious from the charged monomers.

For example, in the case of a polymer including structural units derived from vinylidene chloride, methacrylonitrile, methyl methacrylate, and acrylic acid, in a $^{13}$C-NMR spectrum, integration was performed for 80 ppm to 90 ppm to determine the content of structural units derived from vinylidene chloride, integration was performed for 110 ppm to 130 ppm to determine the content of structural units derived from methacrylonitrile, integration was performed for 170 ppm to 180 ppm to determine the content of structural units derived from methyl methacrylate, and integration was performed for 180 ppm to 200 ppm to determine the content of structural units derived from acrylic acid. The composition ratio of each monomer among the overall polymer was then calculated.

In the case of a copolymer including structural units derived from methyl acrylate instead of methyl methacrylate, calculation is performed by replacing methyl methacrylate in the foregoing calculation method with methyl acrylate.

Moreover, in the case of a copolymer including structural units derived from acrylonitrile instead of methacrylonitrile, calculation is performed by replacing methacrylonitrile in the foregoing calculation method with acrylonitrile.

As a result of the measurement described above, the polymer obtained in each example or comparative example was found to have a monomer composition that was the same as the charging composition.

<Solvent gradient chromatography>

A water dispersion of a vinylidene chloride copolymer was coated onto an aluminum plate using a Mayer bar such as to have a dry coating weight of 10 $g/m^2$ and was dried for 1 minute in an oven held at 100°C. The dried product was collected within 5 minutes using tweezers so as to collect a dried product of the vinylidene chloride copolymer. A 0.5 g sample was collected from this dried product.

A sample collected by the method described above was purified by methanol precipitation described below, and the purified polymer was taken to be a polymer Me. In addition, a sample collected by the method described above was purified by acetone precipitation described below, and the purified polymer was taken to be a polymer Ac.

(Methanol precipitation)

Dropwise addition of 40 mL of methanol was performed with respect to a solution obtained by dissolving 0.5 g of a sample in 10 mL of tetrahydrofuran having a purity of 99.9 mass% or higher. A produced precipitate was filtered off, and insoluble content (methanol precipitate) remaining after filtration was collected. Note that in a situation in which dissolution in tetrahydrofuran was difficult, heating and stirring were performed to the extent that the tetrahydrofuran did

not boil.

(Acetone precipitation)

Dropwise addition of 40 mL of acetone was performed with respect to a solution obtained by dissolving 0.5 g of a sample in 10 mL of tetrahydrofuran having a purity of 99.9 mass% or higher. A produced precipitate was filtered off, and insoluble content (acetone precipitate) remaining after filtration was collected. Note that in a situation in which dissolution in tetrahydrofuran was difficult, heating and stirring were performed to the extent that the tetrahydrofuran did not boil.
Next, the polymer Me and the polymer Ac were each added to tetrahydrofuran such as to have a concentration of 10 mg/mL and were dissolved under stirring to obtain a measurement sample. Note that in a situation in which dissolution in tetrahydrofuran was difficult, heating and stirring were performed to the extent that the tetrahydrofuran did not boil.
These measurement samples were subjected to measurement by solvent gradient chromatography under conditions indicated below.
Note that acetone precipitation was repeated in a case in which, upon comparison of chromatograms for the polymer Me and the polymer Ac, the chromatogram for the polymer Ac included a peak having an area value of at least 50% smaller than a peak at the same position in the chromatogram for the polymer Me.

(Measurement conditions)

Device: HITACHI Chromaster (produced by Hitachi High-Tech Science Corporation)
Analysis software: Waters Empower 3
Column: YMC-Pack ODS-AM (produced by YMC Co., Ltd.; 6.0 mm I.D. × 150 mm; particle diameter: 5 μm; pore diameter: 12 nm (column within 1 month of installation in device used)
Column temperature: 30°C
Pipe length: Approximately 50 cm from column outlet to detector
Analysis chamber temperature: 20°C ± 5°C
Detection: UV detector
Flow rate: 1.0 mL/min
Mobile phase: A = tetrahydrofuran (THF), B = acetonitrile
Injection volume: 10 μL
Washing conditions: 120 seconds washing × 2, washing port 20 seconds
Gradient conditions: Shown below in Table 2

[Table 2]

| Time (min) | A% | B% |
|---|---|---|
| 0 | 0 | 100 |
| 10 | 100 | 0 |
| 13 | 100 | 0 |
| 13.1 | 0 | 100 |
| 27.0 | 0 | 100 |

The chromatogram obtained for the polymer Me and the chromatogram obtained for the polymer Ac were compared to identify a peak for a polymer synthesized in a step A in the chromatogram for the polymer Me. The peak area of this peak was used to calculate the concentration of the polymer synthesized in step A in the measurement sample and then to determine the content (mass%) of the polymer synthesized in step A relative to 100 mass% of total mass of the vinyl halide copolymer (polymer Me).
Note that in a case in which the detection time of an apex of the peak for the polymer synthesized in step A was not less than 6 minutes and less than 8 minutes, the peak was approximated as originating from a homopolymer of methyl methacrylate, and thus a homopolymer of methyl methacrylate was used as a standard.

The homopolymer of methyl methacrylate was dissolved in tetrahydrofuran with at least three concentration levels, and a calibration curve expressing a relationship between an area value of peak I and concentration was prepared. The calibration curve was fitted to a linear function by the least-squares method. A peak area value X for the polymer Me was substituted into the determined function to determine the concentration of the polymer synthesized in step A. However, in a case in which the determined concentration was larger than a largest value or smaller than a smallest value for the standard used in calibration curve preparation, data was added until the concentration was smaller than the largest value and larger than the smallest value for the standard, and then fitting was performed once again using the additional data.

Note that the homopolymer of methyl methacrylate used as a standard was obtained by polymerizing methyl methacrylate by emulsion polymerization described below, subsequently freeze drying a water dispersion, and then performing methanol precipitation as described below.

(Emulsion polymerization)

A glass-lined pressure-resistant reactor was charged with 300 parts by mass of pure water, 0.46 parts by mass of sodium hydrogen sulfite, and 2.2 parts by mass in terms of dry mass of sodium dodecylbenzenesulfonate solution having a solid content of 18% as an emulsifier relative to 100 parts by mass of methyl methacrylate. The contents were stirred while performing degassing, and then the pressure was increased to atmospheric pressure with nitrogen, and the temperature of the contents was maintained at 45 °C. The pressure-resistant reactor was then charged with 10 parts by mass of methyl methacrylate all at once, and 0.5 hours of polymerization was performed.

Metered addition of a solution obtained by dissolving 0.21 parts by mass of sodium persulfate as an initiator and 2.8 parts by mass in terms of dry mass of sodium dodecylbenzenesulfonate solution having a solid content of 18% as an emulsifier in 27 parts by mass of pure water was performed continuously over 3.5 hours starting from the point at which 10 parts by mass of methyl methacrylate was added all at once.

Concurrently thereto, metered addition of the remaining 90 parts by mass of methyl methacrylate was performed continuously over 3 hours starting at 0.5 hours after 10 parts by mass of methyl methacrylate was added all at once.

Once the addition of 90 parts by mass of methyl methacrylate was complete, metered addition of a solution obtained by dissolving 0.18 parts by mass of sodium persulfate as an initiator in 25.5 parts by mass of pure water was performed continuously over 3 hours.

Once the continuous addition of the initiator solution was complete, the temperature was lowered to 20°C, and polymerization was ended.

(Methanol precipitation)

A methyl methacrylate homopolymer obtained by the polymerization described above was freeze dried to obtain a dried product. Dropwise addition of 40 mL of methanol was performed with respect to a solution obtained by dissolving 0.5 g of a sample collected from the dried product in 10 mL of tetrahydrofuran having a purity of 99.9 mass% or higher. A produced precipitate was filtered off, and insoluble content (methanol precipitate) remaining after filtration was collected. Note that in a situation in which dissolution in tetrahydrofuran was difficult, heating and stirring were performed to the extent that the tetrahydrofuran did not boil.

In a case in which the detection time of the apex of the peak for the polymer synthesized in step A was not a time of not less than 6 minutes and less than 8 minutes, the polymer produced in step A was isolated to prepare a standard, a calibration curve was newly prepared, and then the concentration of the polymer synthesized in step A was determined. The standard was prepared by dissolving the isolated polymer synthesized in step A in tetrahydrofuran with at least three concentration levels. Once a peak position for the reference was confirmed to be the same as a peak position in the chromatogram for the polymer Me, a calibration curve expressing a relationship between a peak area value of peak I and concentration was prepared. The calibration curve was fitted to a linear function by the least-squares method. A peak area value X for the polymer Me was substituted into the determined function to determine the concentration of the polymer synthesized in step A. However, in a case in which the determined concentration was larger than a largest value or smaller than a smallest value for the standard used in calibration curve preparation, data was added until the concentration was smaller than the largest value and larger than the smallest value for the standard, and then fitting was performed once again using the additional data.

A baseline was drawn such as to join before and after the peak (from peak onset to peak offset), and then the peak area was determined as the area of a region surrounded by the peak and the baseline.

Note that since step A was performed twice in Example 26, there were two peaks for the polymer synthesized in step A. Therefore, the detection time of an apex of a peak for the polymer synthesized in step A was taken to be an area-weighted average. Moreover, the total mass of the polymer synthesized in step A was determined by calculating the peak area, concentration, and mass for each peak using the calibration curve, and then calculating the sum of the

masses obtained for the peaks.

<Solid content>

After measuring out 2.5 g of a water dispersion into a solids analyzer SMART SYSTEM 5 produced by CEM Corporation, the water dispersion was dried in an environment of 20°C and 50% RH to perform measurement. The results of three measurements were averaged, and the solid content (%) of the water dispersion was calculated by a formula: (dry mass/mass of water dispersion) × 100.

<Surface tension>

The surface tension (mN/m) of a water dispersion was measured by the platinum plate method in an environment of 20°C and 50% RH using a fully automatic surface tensiometer CBVP-Z (produced by Kyowa Interface Science Co., Ltd.).

[Table 3-1]

| | | | | Example 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
|---|---|---|---|---|---|---|---|---|---|---|---|---|---|---|---|---|---|---|---|---|---|---|---|---|---|---|---|---|
| Process | | Step order | - | A→B | A→B | A→B | A→B | A→B | A→B | A→B | A→B | A→B | A→B | A→B | A→B | A→B | A→B | A→B | A→B | B→A | A→B | A→B | A→B | A→B | A→B | A→B | A→B | A→B |
| | | External seed/internal seed | - | External | External | External | External | External | External | External | External | External | External | External | External | External | External | External | Internal | - | External | External | External | External | External | External | External | External |
| Step A | Raw material monomer | Vinylidene chloride (VDC) | Parts by mass | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 60 | 70 | 0 |
| | | Methyl acrylate (MA) | Parts by mass | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Acrylonitrile (AN) | Parts by mass | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Methacrylonitrile (MAN) | Parts by mass | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Methyl methacrylate (MMA) | Parts by mass | 100 | 100 | 100 | 100 | 100 | 100 | 100 | 100 | 100 | 50 | 75 | 80 | 60 | 40 | 20 | 100 | 100 | 100 | 100 | 100 | 100 | 100 | 40 | 30 | 20 |
| | | Butyl acrylate (BA) | Parts by mass | 0 | 0 | 0 | 0 | 0 | 0 | 0 | 0 | 0 | 0 | 0 | 20 | 40 | 60 | 80 | 0 | 0 | 0 | 0 | 0 | 0 | 0 | 0 | 0 | 80 |
| | | Acrylic acid (AA) | Parts by mass | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Styrene (St) | Parts by mass | 0 | 0 | 0 | 0 | 0 | 0 | 0 | 0 | 0 | 50 | 25 | 0 | 0 | 0 | 0 | 0 | 0 | 0 | 0 | 0 | 0 | 0 | 0 | 0 | 0 |
| | | No. of parts of seed | Parts by mass | 3.5 | 3.5 | 3.5 | 3.5 | 3.5 | 3.5 | 2.5 | 1 | 4.5 | 3.5 | 3.5 | 3.5 | 3.5 | 3.5 | 3.5 | 3.5 | 3.5 | 3.5 | 1 | 1 | 1 | 1 | 3.5 | 3.5 | 3.5 |
| | | Average value of logPow | - | 1.38 | 1.38 | 1.38 | 1.38 | 1.38 | 1.38 | 1.38 | 1.38 | 1.38 | 2.19 | 1.79 | 1.58 | 1.78 | 1.98 | 2.18 | 1.38 | 1.38 | 1.38 | 1.38 | 1.38 | 1.38 | 1.38 | 2.00 | 2.10 | 2.18 |
| | Polymer | Glass-transition point Tg | °C | 105 | 105 | 105 | 105 | 105 | 105 | 105 | 105 | 105 | 100 | 97 | 80 | 50 | 0 | -20 | 105 | 105 | 105 | 105 | 105 | 105 | 105 | 70 | 40 | -20 |
| Compounded amount of polymer synthesized in step A | | | Parts by mass | 3.5 | 3.5 | 3.5 | 3.5 | 3.5 | 3.5 | 2.5 | 1.0 | 4.5 | 3.5 | 3.5 | 3.5 | 3.5 | 3.5 | 3.5 | 3.5 | 3.5 | 3.5 | 1.0 | 1.0 | 1.0 | 1.0 | 3.5 | 3.5 | 3.5 |
| Step B | Raw material monomer | Vinylidene chloride (VDC) | Parts by mass | 91 | 91 | 91 | 91 | 91 | 91.5 | 91 | 91 | 91 | 91 | 91 | 91 | 91 | 91 | 91 | 91 | 91 | 91 | 90 | 90 | 89 | 90 | 91 | 91 | 85 |
| | | Methyl acrylate (MA) | Parts by mass | 0 | 5 | 3 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Acrylonitrile (AN) | Parts by mass | 0 | 0 | 0 | 9 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Methacrylonitrile (MAN) | Parts by mass | 9 | 4 | 6 | 0 | 0 | 5.2 | 9 | 9 | 9 | 9 | 9 | 9 | 9 | 9 | 9 | 9 | 9 | 9 | 10 | 10 | 11 | 10 | 9 | 9 | 15 |
| | | Methyl methacrylate (MMA) | Parts by mass | 0 | 0 | 0 | 0 | 9 | 2.4 | 0 | 0 | 0 | 0 | 0 | 0 | 0 | 0 | 0 | 0 | 0 | 0 | 0 | 0 | 0 | 0 | 0 | 0 | 0 |
| | | Butyl acrylate (BA) | Parts by mass | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Decyl octyl acrylate | Parts by mass | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Itaconic acid (IA) | Parts by mass | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Acrylic acid (AA) | Parts by mass | 0 | 0 | 0 | 0 | 0 | 0.9 | 0 | 0 | 0 | 0 | 0 | 0 | 0 | 0 | 0 | 0 | 0 | 0 | 0 | 0 | 0 | 0 | 0 | 0 | 0 |
| | | Ethyl acrylate (EA) | Parts by mass | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| | | Total nitrile | Parts by mass | 9 | 4 | 6 | 9 | 0 | 5.2 | 9 | 9 | 9 | 9 | 9 | 9 | 9 | 9 | 9 | 9 | 9 | 9 | 10 | 10 | 11 | 10 | 9 | 9 | 15 |
| | | Total monomer having reactivity ratio r1 of less than 0.7 | Parts by mass | 9 | 4 | 6 | 9 | 9 | 8.5 | 9 | 9 | 9 | 9 | 9 | 9 | 9 | 9 | 9 | 9 | 9 | 9 | 10 | 10 | 11 | 10 | 9 | 9 | 15 |
| | | Average value of logPow | - | 2.25 | 2.26 | 2.26 | 2.22 | 2.32 | 2.28 | 2.25 | 2.25 | 2.25 | 2.25 | 2.25 | 2.25 | 2.25 | 2.25 | 2.25 | 2.25 | 2.25 | 2.25 | 2.24 | 2.24 | 2.22 | 2.24 | 2.25 | 2.25 | 2.15 |
| | | ΔlogPow | | -0.8743 | -0.8803 | -0.8779 | -0.8356 | -0.9373 | -0.8969 | -0.8743 | -0.8743 | -0.8743 | -0.0643 | -0.4693 | -0.6743 | -0.4743 | -0.2743 | -0.0743 | -0.8743 | -0.8743 | -0.8743 | -0.857 | -0.857 | -0.8397 | -0.857 | -0.2563 | -0.1533 | 0.0295 |
| | Additives | Crystal nucleating agent | Parts by mass | 0 | 0 | 0 | 0 | 0 | 0 | 0 | 0 | 0 | 0 | 0 | 0 | 0 | 0 | 0 | 0 | 0 | 2 | 1 | 5 | 2 | 1 | 0 | 0 | 3 |
| | | Hydrogen peroxide | Parts by mass | 0 | 0 | 0 | 0 | 0 | 0 | 0 | 0 | 0 | 0 | 0 | 0 | 0 | 0 | 0 | 0 | 0 | 0.1 | 0.01 | 0.05 | 0.5 | 1.0 | 0 | 0 | 0 |
| Detection time of peak for polymer synthesized in step A | | | Minutes | 6.9 | 6.9 | 6.9 | 6.9 | 6.9 | 6.9 | 6.9 | 6.9 | 6.9 | 8.8 | 7.8 | 7.4 | 7.8 | 8.3 | 8.7 | 6.9 | 6.9 | 6.9 | 6.9 | 6.9 | 6.9 | 6.9 | 8.3 | 8.6 | 8.7 |
| Content of polymer synthesized in step A determined from peak area | | | Mass% | 3.4 | 3.4 | 3.4 | 3.4 | 3.4 | 3.4 | 2.4 | 1.0 | 4.3 | 3.4 | 3.4 | 3.4 | 3.4 | 3.4 | 3.4 | 3.4 | 3.4 | 3.4 | 1.0 | 1.0 | 1.0 | 1.0 | 3.4 | 3.4 | 3.4 |
| Physical properties | | ΔlogPow | - | -0.87 | -0.88 | -0.88 | -0.84 | -0.94 | -0.90 | -0.87 | -0.87 | -0.87 | -0.06 | -0.47 | -0.67 | -0.47 | -0.27 | -0.07 | -0.87 | -0.87 | -0.87 | -0.86 | -0.86 | -0.84 | -0.86 | -0.26 | -0.15 | 0.03 |
| | | Surface tension | mN/m | 47.8 | 48.3 | 47.7 | 48.1 | 47.9 | 48.4 | 48.5 | 49.7 | 47.5 | 48.3 | 47.7 | 47.7 | 47.7 | 47.9 | 48.2 | 46.2 | 49.7 | 47.9 | 49.5 | 49.3 | 49.3 | 49.3 | 48.2 | 48.4 | 48.5 |
| | | Water vapor transmission rate | $g/m^2$ day | 0.35 | 0.6 | 0.5 | 0.4 | 0.45 | 0.38 | 0.35 | 0.35 | 0.37 | 0.35 | 0.35 | 0.35 | 0.35 | 0.35 | 0.35 | 0.35 | 0.35 | 0.32 | 0.33 | 0.32 | 0.33 | 0.33 | 0.35 | 0.35 | 0.42 |
| | | Film formation life | Months | 12 | 12 | 12 | 12 | 12 | 12 | 11 | 10 | 12 | 6 | 8 | 10 | 8 | 7 | 6 | 9 | 7 | 12 | 10 | 10 | 10 | 10 | 7 | 6 | 12 |

[Table 3-2]

| | | | | Comparative Example | | | | | |
|---|---|---|---|---|---|---|---|---|---|
| | | | | 1 | 2 | 3 | 4 | 5 | 6 |
| Process | | Step order | - | B | B | A->B | A->B | A->B | A->B |
| | | External seed/internal seed | - | - | - | External | External | External | External |
| Step A | Raw material monomer | Vinylidene chloride (VDC) | Parts by mass | - | - | 0 | 0 | 0 | 0 |
| | | Methyl acrylate (MA) | Parts by mass | - | - | 0 | 0 | 0 | 0 |
| | | Acrylonitrile (AN) | Parts by mass | - | - | 0 | 0 | 0 | 0 |
| | | Methacrylonitrile (MAN) | Parts by mass | - | - | 0 | 0 | 0 | 0 |
| | | Methyl methacrylate (MMA) | Parts by mass | - | - | 100 | 100 | 60 | 20 |
| | | Butyl acrylate (BA) | Parts by mass | - | - | 0 | 0 | 40 | 80 |
| | | Acrylic acid (AA) | Parts by mass | - | - | 0 | 0 | 0 | 0 |
| | | Styrene (St) | Parts by mass | - | - | 0 | 0 | 0 | 0 |
| | | Average value of logPow | - | - | - | 1.38 | 1.38 | 1.78 | 2.18 |
| | Polymer | Glass-transition point Tg | °C | - | - | 105 | 105 | 105 | -20 |
| Compounded amount ofpolymer synthesized in step A | | | Parts by mass | - | - | 0.8 | 3.5 | 3.32 | 3.5 |

(continued)

| | | | | Comparative Example | | | | | |
|---|---|---|---|---|---|---|---|---|---|
| | | | | 1 | 2 | 3 | 4 | 5 | 6 |
| Step B | Raw material monomer | Vinylidene chloride (VDC) | Parts by mass | 90.1 | 91 | 90.57 | 91.45 | 90.07 | 60 |
| | | Methyl acrylate (MA) | Parts by mass | 0 | 0 | 9.12 | 5.44 | 5.95 | 0 |
| | | Acrylonitrile (AN) | Parts by mass | 0.5 | 0 | 0 | 0 | 0 | 0 |
| | | Methacrylonitrile (MAN) | Parts by mass | 0 | 9 | 0 | 0 | 0 | 0 |
| | | Methyl methacrylate (MMA) | Parts by mass | 9.4 | 0 | 0 | 0 | 0 | 0 |
| | | Butyl acrylate (BA) | Parts by mass | 0 | 0 | 0 | 3.11 | 0 | 40 |
| | | Decyl octyl acrylate | Parts by mass | 0 | 0 | 0 | 0 | 2.98 | 0 |
| | | Itaconic acid (IA) | Parts by mass | 0 | 0 | 0 | 0 | 1 | 0 |
| | | Acrylic acid (AA) | Parts by mass | 0 | 0 | 0.31 | 0 | 0 | 0 |
| | | Ethyl acrylate (EA) | Parts by mass | 0 | 0 | 0 | 0 | 0 | 0 |
| | | Total nitrile | Parts by mass | 0.5 | 9 | 0 | 0 | 0 | 0 |
| | | Total monomer having reactivity ratio r1 of less than 0.7 | Parts by mass | 9.9 | 9 | 0.31 | 3.11 | 3.98 | 0 |
| | | Average value of logPow | - | 230 | 2.25 | 2.26 | 2.32 | 2.21 | 2.40 |
| | Additive- | Crystal nucleating agent | Parts by mass | 0 | 0 | 0 | 0 | 0 | 0 |
| | | Hydrogen peroxide | Parts by mass | 0 | 0 | 0 | 0 | 0 | 0 |
| Detection time of peak for polymer synthesized in step A | | | Minutes | - | - | 6.9 | 6.9 | 7.8 | 8.7 |
| Content of polymer synthesized in step A determined from peak area | | | Mass% | - | - | 0.8 | 3.4 | 3.2 | 3.4 |
| Physical properties | | ΔlogPow | - | - | - | -0.88 | -0.94 | -0.43 | -0.22 |
| | | Surface tension | mN/m | 49.8 | 50.6 | 32.0 | 56.9 | 56.0 | 47.8 |
| | | Water vapor transmission rate | $g/m^2$ day | 0.5 | 0.33 | 0.9 | 0.8 | 0.85 | 2.5 |
| | | Film formation life | Months | 1 | 1 | 12 | 12 | 12 | 12 |

[Table 3-3]

| | | | | Example | |
|---|---|---|---|---|---|
| | | | | 26 | 27 |
| Process | | Step order | - | A->B->A | A-->B->B |
| | | External seed/internal seed | - | External | External |
| Step A-1 | Raw material monomer | Vicrylidene chloride (VDC) | Parts by mass | 0 | 0 |
| | | Methyl acrylate (MA) | Parts by mass | 0 | 0 |
| | | Acrylonitrile (AN) | Parts by mass | 0 | 0 |
| | | Methacrylonitrile (MAN) | Parts by mass | 0 | 0 |
| | | Methyl methacrylate (MMA) | Parts by mass | 100 | 100 |
| | | Butyl acrylate (BA) | Parts by mass | 0 | 0 |
| | | Acrylic acid (AA) | Parts by mass | 0 | 0 |
| | | Styrene (St) | Parts by mass | 0 | 0 |
| | | Average value oflogPow | - | 1.38 | 1.38 |
| | Polymer | Glass-transition point Tg | °C | 105 | 105 |
| Compounded amount of polymer synthesized in step A-1 | | | Parts by mass | 3.5 | 3.5 |
| Step A-2 | Raw material monomer | Vicrylidene chloride (VDC) | Parts by mass | 0 | - |
| | | Methyl acrylate (MA) | Parts by mass | 0 | - |
| | | Acrylonitrile (AN) | Parts by mass | 0 | - |
| | | Methacrylonitrile (MAN) | Parts by mass | 0 | - |
| | | Methyl methacrylate (MMA) | Parts by mass | 100 | - |
| | | Butyl acrylate (BA) | Parts by mass | 0 | - |
| | | Acrylic acid (AA) | Parts by mass | 0 | - |
| | | Styrene (St) | Parts by mass | 0 | - |
| | | Average value of logPow | - | 1.38 | - |
| | Polymer | Glass-transition point Tg | °C | 105 | - |
| Step B-1 | Raw material monomer | Vicrylidene chloride (VDC) | Parts by mass | 91 | 91 |
| | | Methyl acrylate (MA) | Parts by mass | 0 | 0 |
| | | Acrylonitrile (AN) | Parts by mass | 0 | 0 |
| | | Methacrylonitrile (MAN) | Parts by mass | 9 | 9 |
| | | Methyl methacrylate (MMA) | Parts by mass | 0 | 0 |
| | | Butyl acrylate (BA) | Parts by mass | 0 | 0 |
| | | Decyl octyl acrylate | Parts by mass | 0 | 0 |
| | | Itaconic acid (IA) | Parts by mass | 0 | 0 |
| | | Acrylic acid (AA) | Parts by mass | 0 | 0 |
| | | Total nitrile | Parts by mass | 9 | 9 |
| | | Total monomer having reactivity ratio r1 of less than 0.7 | Parts by mass | 9 | 9 |
| | | Average value of logPow | - | 2.25 | 2.25 |

(continued)

| | | | | Example | |
|---|---|---|---|---|---|
| | | | | 26 | 27 |
| Step B-2 | Raw material monomer | Vicrylidene chloride (VDC) | Parts by mass | - | 90 |
| | | Methyl acrylate (MA) | Parts by mass | - | 0 |
| | | Acrylonitrile (AN) | Parts by mass | - | 0 |
| | | Methacrylonitrile (MAN) | Parts by mass | - | 10 |
| | | Methyl methacrylate (MMA) | Parts by mass | - | 0 |
| | | Butyl acrylate (BA) | Parts by mass | - | 0 |
| | | Decyl octyl acrylate | Parts by mass | - | 0 |
| | | Itaconic acid (IA) | Parts by mass | - | 0 |
| | | Acrylic acid (AA) | Parts by mass | - | 0 |
| | | Total nitrile | Parts by mass | - | 10 |
| | | Total monomer having reactivity ratio r1 of less than 0.7 | Parts by mass | - | 10 |
| | | Average value of logPow | - | - | 2.24 |
| Detection time of peak for polymer synthesized in step A | | | Minutes | 6.9 | 6.9 |
| Content of polymer synthesized in step A determined from peak area | | | Mass% | 3.5 | 3.4 |
| Physical properties | | ΔlogPow | - | -0.87 | -0.87 |
| | | Surface tension | mN/m | 48.3 | 47.6 |
| | | Water vapor transmission rate | $g/m^2$ day | 0.35 | 0.35 |
| | | Film formation life | Months | 12 | 12 |

[Table 3-4]

| | | | | Comparative Example | |
|---|---|---|---|---|---|
| | | | | 7 | 8 |
| Process | | Step order | - | C→B | C→B |
| | | External seed/internal seed | - | External | External |
| Step C | Raw material monomer | Vinylidene chloride (VDC) | Parts by mass | 0 | 0 |
| | | Methyl acrylate (MA) | Parts by mass | 0 | 0 |
| | | Acrylonitrile (AN) | Parts by mass | 0 | 0 |
| | | Methacrylonitrile (MAN) | Parts by mass | 0 | 0 |
| | | Methyl methacrylate (MMA) | Parts by mass | 40 | 0 |
| | | Butyl acrylate (BA) | Parts by mass | 0 | 0 |
| | | Acrylic acid (AA) | Parts by mass | 0 | 0 |
| | | Styrene (St) | Parts by mass | 60 | 100 |
| | | Average value of logPow | - | 2.35 | 3.00 |
| | Polymer | Glass-transition point Tg | °C | 105 | 105 |
| Compounded amount of polymer synthesized in step C | | | Parts by mass | 3.5 | 3.5 |

(continued)

| | | | | Comparative Example | |
|---|---|---|---|---|---|
| | | | | 7 | 8 |
| Step B | Raw material monomer | Vinylidene chloride (VDC) | Parts by mass | 91 | 91 |
| | | Methyl acrylate (MA) | Parts by mass | 0 | 0 |
| | | Acrylonitrile (AN) | Parts by mass | 0 | 0 |
| | | Methacrylonitrile (MAN) | Parts by mass | 9 | 9 |
| | | Methyl methacrylate (MMA) | Parts by mass | 0 | 0 |
| | | Butyl acrylate (BA) | Parts by mass | 0 | 0 |
| | | Decyl octyl acrylate | Parts by mass | 0 | 0 |
| | | Itaconic acid (IA) | Parts by mass | 0 | 0 |
| | | Acrylic acid (AA) | Parts by mass | 0 | 0 |
| | | Ethyl acrylate (EA) | Parts by mass | 0 | 0 |
| | | Total nitrile | Parts by mass | 9 | 9 |
| | | Total monomer having reactivity ratio r1 of less than 0.7 | Parts by mass | 9 | 9 |
| | | Average value of logPow | - | 2.25 | 2.25 |
| | Additives | Crystal nucleating agent | Parts by mass | 0 | 0 |
| | | Hydrogen peroxide | Parts by mass | 0 | 0 |
| Detection time of peak for polymer synthesized in step C | | | Minutes | 9.1 | 10.6 |
| Content of polymer synthesized in step C determined from peak area | | | Mass% | 3.4 | 3.4 |
| Physical properties | | ΔlogPow (difference between step C and step B) | - | 0.10 | 0.75 |
| | | Surface tension | mN/m | 47.6 | 48.2 |
| | | Water vapor transmission rate | $g/m^2$ day | 0.36 | 0.37 |
| | | Film formation life | Months | 4 | 2 |

[Example 28]

A water dispersion was produced in the same way as in Example 1 with the exception that the solid content was adjusted to 63%.

[Example 29]

A water dispersion was produced in the same way as in Example 1 with the exception that the solid content was adjusted to 58.1%.

[Example 30]

A water dispersion was produced in the same way as in Example 1 with the exception that the solid content was adjusted to 50.1%.

[Example 31]

A water dispersion was produced in the same way as in Example 1 with the exception that the solid content was adjusted to 40%.

<Coating weight per one coating and number of coatings required for 100 g/m$^2$ coating>

The water dispersion of a vinylidene chloride copolymer obtained in each of Examples 28 to 31 was coated onto a PET film of 15 μm in thickness using a Mayer bar (wire no.: 9) and was dried for 1 minute in an oven held at 100°C.
The dried coated film was cut out as 5 cm-square, and then the mass thereof was measured. Thereafter, the coated film was washed with THF, the vinylidene chloride copolymer was removed, and the mass was remeasured.
The coating weight (g/m$^2$) per one coating was calculated from the difference in mass between before and after THF washing.
In addition, the number of coatings required to obtain a coating weight of 100 g/m$^2$ was calculated from the coating weight (g/m$^2$) per one coating that was determined.

<Yellowness index YI>

The water dispersion of a vinylidene chloride copolymer obtained in each of Examples 28 to 31 was coated onto a PET film of 15 μm in thickness using a Mayer bar (wire no.: 9) and was dried for 1 minute in an oven held at 100°C. This operation was repeated so as to perform recoating until a total coating weight of 100 g/m$^2$ was reached.
The yellowness index YI of the film after coating was determined using a spectrophotometer CM-5 (produced by Konica Minolta Inc.). The measurement conditions were as follows.

Color system: L*a*b*
Index: YI ASTM E313-96
Viewing field: 10°
Main light source: D65
Second light source: None
Measurement method: Transmission measurement

Note that a smaller value for the yellowness index YI was judged to indicate less yellowness and better color tone.

[Table 4]

| | | Example | | | |
|---|---|---|---|---|---|
| | | 28 | 29 | 30 | 31 |
| Coating weight per one coating | g/m$^2$ | 17 | 14 | 10 | 5.9 |
| Number of coatings until 100 g/m$^2$ is reached | Times | 6 | 8 | 11 | 17 |
| Yellowness index YI | - | 1.9 | 2.1 | 2.3 | 2.6 |

[Example 32]

A water dispersion was produced in the same way as in Example 1 with the exception that the sodium alkyl diphenyl ether sulfonate added in step B was set as 1.0 parts. The surface tension of the water dispersion was subsequently adjusted to 52 mN/m through addition of a 50% aqueous solution of sodium alkyl diphenyl ether disulfonate.
In evaluation of external appearance, there was striation in the coating direction at approximately the same intervals as intervals of wires in the Mayer bar.

[Example 33]

A water dispersion was produced in the same way as in Example 1 with the exception that the sodium alkyl diphenyl ether sulfonate added in step B was set as 1.0 parts. The surface tension of the water dispersion was subsequently adjusted to 47.5 mN/m through addition of a 50% aqueous solution of sodium alkyl diphenyl ether disulfonate.
In evaluation of external appearance, there was slight striation in the coating direction at approximately the same intervals as intervals of wires in the Mayer bar, but there was little striation and good external appearance compared to Example 32.

[Example 34]

A water dispersion was produced in the same way as in Example 1 with the exception that the sodium alkyl

diphenyl ether sulfonate added in step B was set as 1.0 parts. The surface tension of the water dispersion was subsequently adjusted to 44.5 mN/m through addition of a 50% aqueous solution of sodium alkyl diphenyl ether disulfonate.

In evaluation of external appearance, the film was smooth and had the best external appearance compared to other examples.

[Example 35]

A water dispersion was produced in the same way as in Example 1 with the exception that the sodium alkyl diphenyl ether sulfonate added in step B was set as 1.0 parts. The surface tension of the water dispersion was subsequently adjusted to 38 mN/m through addition of a 50% aqueous solution of sodium alkyl diphenyl ether disulfonate.

In evaluation of external appearance, there was striation in a shape similar to a laid out polygonal pattern, but there was little striation and good external appearance compared to Example 32. On the other hand, there was much striation and poor external appearance compared to Examples 33 and 34.

<External appearance>

The water dispersion of a vinylidene chloride copolymer obtained in each of Examples 32 to 35 was coated onto a PET film of 15 μm in thickness using a Mayer bar (wire no.: 9) and was dried for 1 minute in an oven held at 100°C. This operation was repeated so as to perform recoating until the total coating weight reached 100 $g/m^2$.

Thereafter, external appearance was visually evaluated.

Measurement results for the examples and comparative examples are presented.

The results in Table 3 demonstrate that a water dispersion of a vinyl halide copolymer according to the present disclosure has an effect of excelling in terms of film formation properties after long-term storage while also maintaining high water vapor barrier properties of a film after coating.

INDUSTRIAL APPLICABILITY

A water dispersion of a vinyl halide copolymer according to the present disclosure has excellent water vapor barrier properties of a film after coating and film formation properties after long-term storage, and thus can suitably be used as a coating material for various materials such as films for packaging of food and pharmaceutical products, paper, and general household goods.

## Claims

1. A water dispersion of a vinyl halide copolymer synthesizable by a method comprising at least one of each of:

   an emulsion polymerization step A in which a monomer group used as a raw material has an n-octanol/water partition coefficient (logPow) with an average value of 2.2 or less; and
   an emulsion polymerization step B in which a monomer group used as a raw material includes a vinyl halide monomer and a copolymerization monomer having a reactivity ratio r1 with vinylidene chloride of less than 0.7 and in which a mass proportion of the vinyl halide monomer among 100 mass% of the monomer group is 60 mass% or more, wherein
   a mass proportion of structural units derived from the copolymerization monomer having a reactivity ratio r1 of less than 0.7 is 4 mass% or more relative to 100 mass% of total mass of a polymer synthesized in the step B, and provisos are made that the method does not encompass a method in which an average value for an n-octanol/water partition coefficient (logPow) of a monomer group used as a raw material is the same value in every emulsion polymerization step and that an emulsion polymerization step corresponding to both the step A and the step B may be considered to be the step A or may be considered to be the step B.

2. The water dispersion of a vinyl halide copolymer according to claim 1, wherein the vinyl halide monomer is vinylidene chloride.

3. The water dispersion of a vinyl halide copolymer according to claim 1 or 2, wherein a value (ΔlogPow) obtained when an average value for an n-octanol/water partition coefficient (logPow) of the monomer group used as a raw material in the step B is subtracted from the average value for the n-octanol/water partition coefficient (logPow) of the monomer group used as a raw material in the step A is less than 0.

4. The water dispersion of a vinyl halide copolymer according to any one of claims 1 to 3, wherein a polymer synthesized in the step A has a glass-transition point of 20°C or higher.

5. The water dispersion of a vinyl halide copolymer according to any one of claims 1 to 4, wherein a mass proportion of structural units derived from a vinyl halide monomer is 70 mass% or less relative to 100 mass% of total mass of a polymer synthesized in the step A.

6. The water dispersion of a vinyl halide copolymer according to any one of claims 1 to 5, wherein the copolymerization monomer having a reactivity ratio r1 of less than 0.7 is one or more selected from the group consisting of a nitrile group-containing monomer, a carboxyl group-containing monomer, and methyl methacrylate.

7. The water dispersion of a vinyl halide copolymer according to claim 6, wherein a mass proportion of structural units derived from the nitrile group-containing monomer is 1 mass% or more relative to 100 mass% of total mass of structural units derived from the vinyl halide monomer, structural units derived from the copolymerization monomer having a reactivity ratio r1 of less than 0.7, and structural units derived from a copolymerization monomer having a reactivity ratio r1 of 0.7 or more.

8. The water dispersion of a vinyl halide copolymer according to claim 6 or 7, wherein the nitrile group-containing monomer is methacrylonitrile.

9. The water dispersion of a vinyl halide copolymer according to any one of claims 1 to 8, comprising more than 0 parts by mass and not more than 20 parts by mass of a crystal nucleating agent relative to 100 parts by mass of the vinyl halide copolymer.

10. A water dispersion of a vinyl halide copolymer in which the vinyl halide copolymer satisfies all of the following conditions (1) to (3):

(1) upon comparison of a chromatogram obtained through measurement by solvent gradient chromatography of a purified polymer obtained through purification of the vinyl halide copolymer by methanol precipitation and a chromatogram obtained through measurement by solvent gradient chromatography of a purified polymer obtained through purification of the vinyl halide copolymer by acetone precipitation, a peak I is present that only appears in the chromatogram for the purified polymer obtained through purification by methanol precipitation;
(2) a detection time of a peak apex of the peak I is less than 9 minutes; and
(3) the vinyl halide copolymer includes a polymer synthesized from a monomer group used as a raw material that contains a vinyl halide monomer and a copolymerization monomer having a reactivity ratio r1 with vinylidene chloride of less than 0.7, wherein a mass proportion of the vinyl halide monomer among 100 mass% of the monomer group is 60 mass% or more, and a mass proportion of structural units derived from the copolymerization monomer having a reactivity ratio r1 of less than 0.7 is 4 mass% or more relative to 100 mass% of total mass of the polymer.

11. The water dispersion of a vinyl halide copolymer according to claim 10, wherein content of a polymer of the peak I determined from peak area of the peak I is 0.1 mass% or more relative to 100 mass% of total mass of the vinyl halide copolymer.

12. The water dispersion of a vinyl halide copolymer according to claim 10 or 11, wherein

the detection time of the peak apex of the peak I is 6.7 minutes to 7.2 minutes, and
content of a polymer of the peak I determined from peak area of the peak I is 0.1 mass% or more relative to 100 mass% of total mass of the vinyl halide copolymer.

13. The water dispersion of a vinyl halide copolymer according to any one of claims 1 to 12, having a surface tension of not less than 20 mN/m and less than 48 mN/m.

14. The water dispersion of a vinyl halide copolymer according to any one of claims 1 to 13, having a solid content of more than 50%.

15. A film comprising a layer formed by coating the water dispersion of a vinyl halide copolymer according to any one of claims 1 to 14.

## INTERNATIONAL SEARCH REPORT

International application No.
**PCT/JP2022/014661**

**A. CLASSIFICATION OF SUBJECT MATTER**

***C09D 5/02***(2006.01)i; ***C08F 293/00***(2006.01)i; ***C09D 127/08***(2006.01)i; ***C08F 2/22***(2006.01)i
FI: C08F293/00; C09D127/08; C09D5/02; C08F2/22

According to International Patent Classification (IPC) or to both national classification and IPC

**B. FIELDS SEARCHED**

Minimum documentation searched (classification system followed by classification symbols)

C09D5/02; C08F293/00; C09D127/08; C08F2/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-541565 A (SOLVAY SA) 26 November 2009 (2009-11-26)<br>claims 1-13, paragraphs [0041], [0042], examples 1-3 | 1-15 |
| Y | JP 2018-127523 A (ASAHI KASEI CORP.) 16 August 2018 (2018-08-16)<br>claims 1-2, paragraph [0005], examples 1-5 | 1-15 |
| Y | JP 2000-302821 A (ASAHI CHEMICAL INDUSTRY CO., LTD.) 31 October 2000 (2000-10-31)<br>claims 1-3, paragraph [0006], examples 1-4 | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/014661**

| Patent document cited in search report | Publication date (day/month/year) | Patent family member(s) | Publication date (day/month/year) |
|---|---|---|---|
| JP 2009-541565 A | 26 November 2009 | US 2009/0203827 A1<br>claims 1-13, paragraphs [0123], [0124], examples 1-3<br>EP 2041193 B1<br>CN 101506251 A | |
| JP 2018-127523 A | 16 August 2018 | (Family: none) | |
| JP 2000-302821 A | 31 October 2000 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013125699 A1
- JP 2001526315 A
- JP H05202107 A
- JP 2018127523 A
- JP S60192768 A
- FR 1466220 A
- JP 2009541565 A


### Non-patent literature cited in the description


- Polymer Handbook
- *Inorganic Materials,* July 1996, vol. 3, 271-283